# EUROPEAN PATENT APPLICATION

(11) **EP 1 191 533 A1**
(43) Date of publication of application: **27.03.2002**
(21) Application number: 00915460.0
(22) Date of filing: 10.04.2000
(51) Int. Cl.: G11B 23/087

(54) **MAGNETIC TAPE CASSETTE, ITS PART, METHOD FOR MOLDING THE PART, METHOD FOR MARKING MOLDED PRODUCT, AND MOLDED PRODUCT**

(30) Priority: 08.04.1999 JP 10186699; 12.04.1999 JP 10363899; 07.06.1999 JP 16010399
(71) Applicant: FUJI PHOTO FILM CO., LTD., Kanagawa-ken, 250-0193 (JP)
(72) Inventor: NAKANE, Takanobu, Fuji Photo Film Co., Ltd., Odawara-shi, Kanagawa 250-0001 (JP); NISHIYAMA, Shigeru, Fuji Photo Film Co., Ltd., Odawara-shi, Kanagawa 250-0001 (JP)
(74) Representative: Klunker . Schmitt-Nilson . Hirsch
(86) International application number: JP0002323
(87) International publication number: WO0062296

(57) **Abstract**

A magnetic tape cassette is provided with a lower half or a slider having a recess portion (groove) in the vicinity of a guide groove for determining a driving position of a magnetic tape and on the opposite side along the guide groove; a slider having a dust-proof wall in an engagement sliding portion; a brake member having thickness reducing portions on the rear side of the sliding surface of the horizontal plate portion and having a thickness thus being kept substantially constant; a lower half or a slider having a groove portion for providing a stamped portion which is formed symmetrically, a leaf spring having a drawn portion in at least one of plate surfaces of arm portions and a central bent portion; and the like. As a result, in the magnetic tape cassette, it is possible to suppress deformation such as warpage of side walls due to molding shrinkage difference or the like of the slider or the lower half, to prevent deformation of the brake member due to the molding shrinkage difference, to keep excellent dimensional precision, to improve the dust-proof property, and to improve a degree of freedom in designing leaf springs to thereby reduce the cost and to improve the productivity. Further, in the slider of the magnetic tape cassette, at least upper and lower end faces of vertical wall surfaces of a side core of molds for molding the side walls are rounded so that the side walls ride over the side core when the molds are opened after molding to thereby make it possible to mold a slider that is superior in terms of outer appearance and moldability, without sacrificing the dimensional precision. The molded article stamping method may Further be applied to a plastic molded article in addition to the magnetic tape cassette.

## Description

### TECHNICAL FIELD

The present invention relates to a magnetic tape cassette, its parts, a method of molding the parts, a method of stamping a molded article and a molded article fabricated by the method, particularly to a magnetic tape cassette in which an opening portion into which a tape loading device in a recording and reproducing apparatus can be inserted is provided in a bottom surface of a casing and furthermore in which a slider for opening and closing this opening portion or a slider provided with a dust-proof wall is arranged, and more specifically to improvement of the structure of the above-described slider. Further, the present invention Further relates to a method of molding a slider to be mounted on the outside of a lower half for protecting a magnetic tape accommodated within a magnetic tape cassette; a magnetic tape cassette with an improved brake member for limiting rotation of a take-up hub for preventing a loosening of a magnetic tape accommodated within the magnetic tape cassette; and a plate spring used in a magnetic tape cassette or the like, more specifically to a plate spring having an extremely large deformation amount like a slider spring of a magnetic tape cassette. Further, the present invention relates to a stamping method of a plastic molded article such as a magnetic tape cassette or the like whose surface is stamped and a molded article such as a magnetic tape cassette or the like, more specifically to a stamping method of a molded article whose surface is stamped without degrading dimensional precision by molding with molds provided with stamping surfaces; and to a plastic molded article such as a magnetic tape cassette or the like in which a stamped portion is provided in its surface, a dimensional balance is excellent, and there is no rattle or peeling of resin during assembling or using it.

### BACKGROUND ART

A magnetic tape cassette that can record digital signFurthern a magnetic tape at a high density is conventionally known. For example, a DDS for recording data of a computer or a DAT used for an audio system is known as such a small and light magnetic tape cassette.

In such a magnetic tape cassette, hubs around which a magnetic tape is wound are accommodated in right and left portions of a casing, and the above-described opening portion is provided in a front surface and a bottom surface of the casing so that the tape cassette may be loaded to the above-described magnetic tape by a tape loading device. Further, in order to prevent dust or the like from entering through the opening portion from the outside, a slider for closing the above-described opening portion at the bottom surface is disposed so as to be slidable in a loading direction of the tape cassette along the bottom surface side of the casing.

With respect to the above-described tape cassette, a conventional arts for opening and closing the slider installed slidably back and forth to the casing in response to the loading operation of the tape cassette to the recording and reproducing apparatus is disclosed in, for example, JP 60-129985 A, JP 60-136078 A, JP 60-136879 A and JP 60-175271 A.

Further, when the slider is to be mounted slidably onto the bottom surface of the casing, when the slider is brought into totally sliding contact with the bottom surface of the casing, the sliding resistance becomes excessive with even a slight error in manufacturing precision, or with internal strain or thermal deformation, thereby resulting in malfunction of the slider. Accordingly, a piece of art for providing a rib-shaped projection extending in a back-and-forth direction on the inner surface of the slider and causing the slider to slidably contact with the casing through this projection is disclosed in, for example, JP 7-21952 B. In this conventional art, a locking mechanism is provided for locking the slider in an open position and a closed position, and a concave guide groove for guiding a lock release member for releasing the locked condition is formed on the bottom surface of the slider.

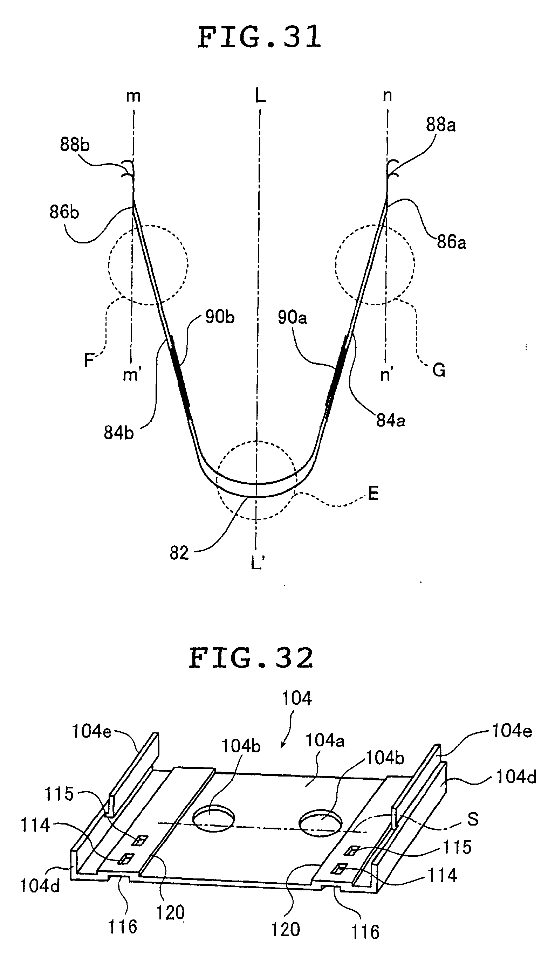

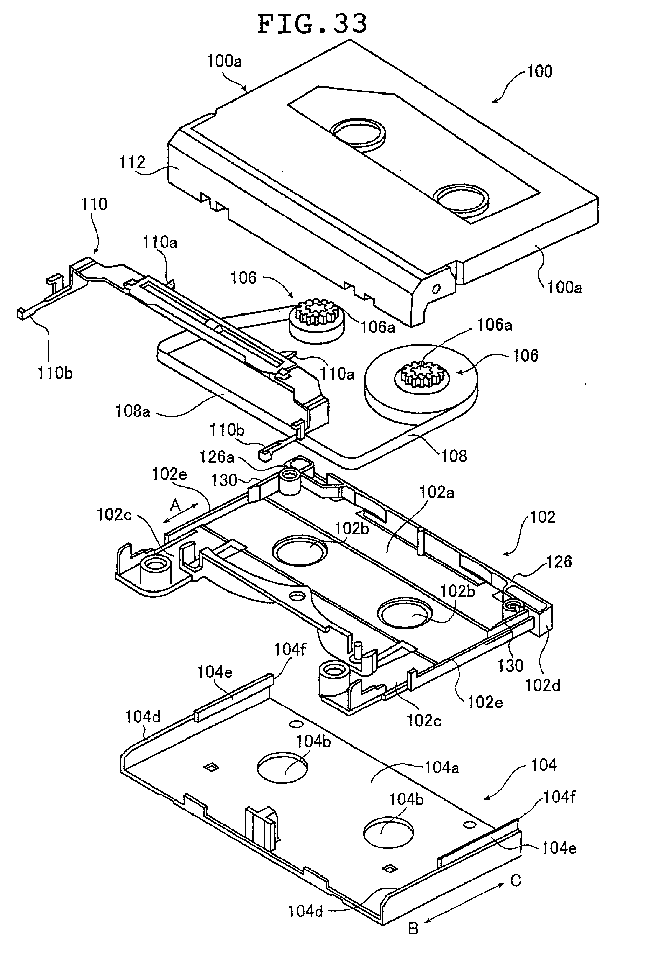

Fig. 32 shows a structural example of a slider 104 of a conventional tape cassette. The overall structure will be described later. Through-holes 114 and 115 engaging tip ends of elastic lock pieces of the casing are opened in this slider 104, and convex guide grooves 116 for guiding lock release member for releasing this engagement is provided at the bottom surface. Furthermore, on the top surface of the slider 104, projections 120 slidingly contacting a bottom surface of a lower half 102 (see Fig. 33) is formed such that they extend in rib-shaped manner over the entire length in the sliding direction from a front end to a rear end of the slider 104. The structure other than above-mentioned will be explained by using the same reference numerals for the same components as those shown in Fig. 33 to be described later. Therefore, for description thereof, refer to the explanation later.

Note that, in the tape cassette having the slider according to the above-described conventional art, the projections are provided at the slider over the entire longitudinal portion thereof in the sliding direction including the concave grooves having a substantially rectangular shape for guiding the lock release members, so that a thick portion and a thin portion are arranged adjacent by each other in the slider. Accordingly, "warpage" is apt to occur in a form after the molding and there might occur a fear that dimensional precision degrades to cause various faults.

Namely, because a portion where the above-described concave grooves for guiding the above-described lock release members are formed becomes thin when molding the slider, whereby fluidization of resin becomes non-smooth, and Further a local strain occurs in a molded article. Therefore, "warpage" or partial deformation would occur. There are Further problems in terms of outer appearance. Concretely, a transfer fault of patterns, weld lines, non-uniformity in appearance, shrinkage or the like is apt to occur.

Further, in one example as shown in Fig. 33, the magnetic tape cassette is basically constituted by an upper half 100, a lower half 102 coupled with the above-described upper half 100 to form a casing, a slider coupled thereto so as to be slidable in a back-and-forth direction (the direction indicated by an arrow A) of the casing along the bottom surface and side surfaces of the lower half 102 and a magnetic tape 34 accommodated in the casing.

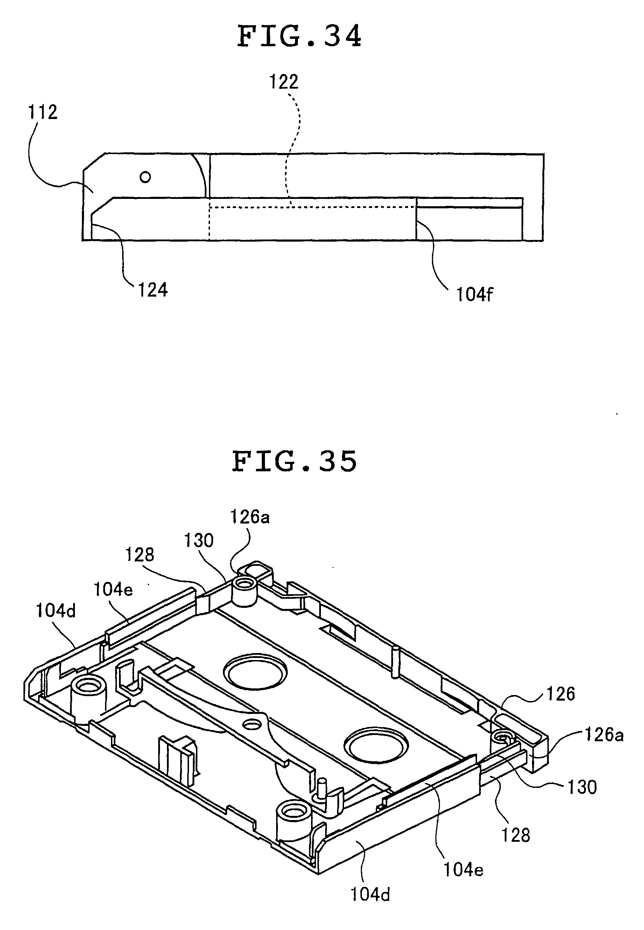

In this magnetic tape cassette, the slider 104 has a rectangular engagement sliding portions 104e, 104e by a longitudinal side at a rear end inner edge of right and left side walls 104a, 104a. As indicated by the dotted lines in Fig. 34, when the upper half 100 and the lower half 102 are coupled to form the casing, the engagement sliding portions 104e, 104e are slidably attached and inserted into sliding grooves 122 formed, respectively, in a space between a left side wall 100a of the upper half 100 and a left side wall 102e of the lower half 102 and a space between a right side wall 100a of the upper half 100 and a right side wall 102e of the lower half 102. Each of the lower surfaces of the engagement sliding portions 104e, 104e are slidably attached to and engaged with the top surfaces of right and left side walls of the lower half 102, respectively.

As shown in Fig. 34, when the magnetic tape is not used, the slider 104 is engaged and retained by an engagement lock mechanism arranged on the bottom surface 102a of the lower half 102 with its front end portion 124 in an advanced position in abutment with an inner end of a front lid 112 of the upper half 100, thereby closing drive shaft insertion holes 102b, 102b on the feed side and the take-up side of the lower half 102. Thus it is possible to prevent dust or foreign matters from entering from below of the drive shaft insertion holes 102b, 102b.

Further, during use of the magnetic tape, the engagement lock mechanism is released by the magnetic tap recording and reproducing apparatus, while rear ends 104f, 104f of the right and left side walls 104d, 104d are slidably retracted to an abutment position with inner side wall ends 126a, 126a of the rear side wall 126 of the lower half 102, respectively. At this time, guide holes 104b, 104b formed in the bottom surface 104a of the slider 104 coincide with the drive shaft insertion holes 102b, 102b of the hubs on the feed side and the take-up side of the above-described lower half 102 to open the above-described drive shaft insertion holes 102b, 102b.

As shown in Figs. 34 and 35, in this magnetic tape cassette, when the slider 104 is located in an advanced position, opening portions 128, 128 are formed corresponding to a retracted position of the advanced slider 104 at lower portions on both sides of the casing between the rear ends 104f, 104f of the right and left side walls 104d, 104d of the slider 104 and the inside wall ends 126a, 126a of rear side wall 126 of lower half 102. These opening portions 128, 128 may be utilized as portions that are gripped by chucks of an automatic loader when the magnetic tape cassette is automatically loaded in the recording and reproducing apparatus by the automatic loader.

Conventionally, as shown in Fig. 35, closing walls 130, 130 extends upwardly from the bottom surface of the lower half 102 in these opening portions 128, 128. As shown in Fig. 35, these closing walls 130, 130 are respectively overlapped with the rear ends 104f, 104f of right and left side walls of the slider 104 to close an inner deep portion of the opening portions 128, 128 to serve to prevent invasion of dust or foreign matters.

In this magnetic tape cassette, portions where the closing walls 130, 130 are provided correspond to outer contours of regions into which the magnetic tape wound by the feed side hub 106 or the take-up side hub 106 of the magnetic tape are accommodated. Thus, the portions are formed such that the closing walls 130, 130 are not in into contact with the magnetic tape when the latter is wound around either one of the feed side hub and the take-up hub and the wound magnetic tape has a maximum diameter. In order to secure an amount of the magnetic tape that can be accommodated in the casing as much as possible, it is necessary to broaden the winding space as much as possible, and it is thus necessary to form the closing wall as thin as possible.

In order to serve to prevent the invasion of dust or foreign matters, it is necessary to make these closing walls 130, 130 to have such a continuous height that the closing walls may close at least the opening portions 128, 128. Further, if, in order to secure the winding space of the magnetic tape as much as possible, thickness of the closing walls is decreased, it may become difficult for molten resin, which is introduced into the molds during molding, to flow through a cavity corresponding to these portions , thereby causing a problem in molding. If thickness of the closing walls is sufficiently increased in order to avoid this problem in molding, then it is impossible to secure sufficient tape winding space, causing a problem that a winding amount of magnetic tape cannot be secured to a maximum.

Further, as described above, in a magnetic tape cassette such as a DDS, a DAT or the like, both ends of an elongated magnetic tape are fixed, and a pair of hubs or take-up reels around which this magnetic tape is wound are accommodated in a case that exposes only the magnetic tape at a portion tensioned between these two take-up hubs or take-up reels.

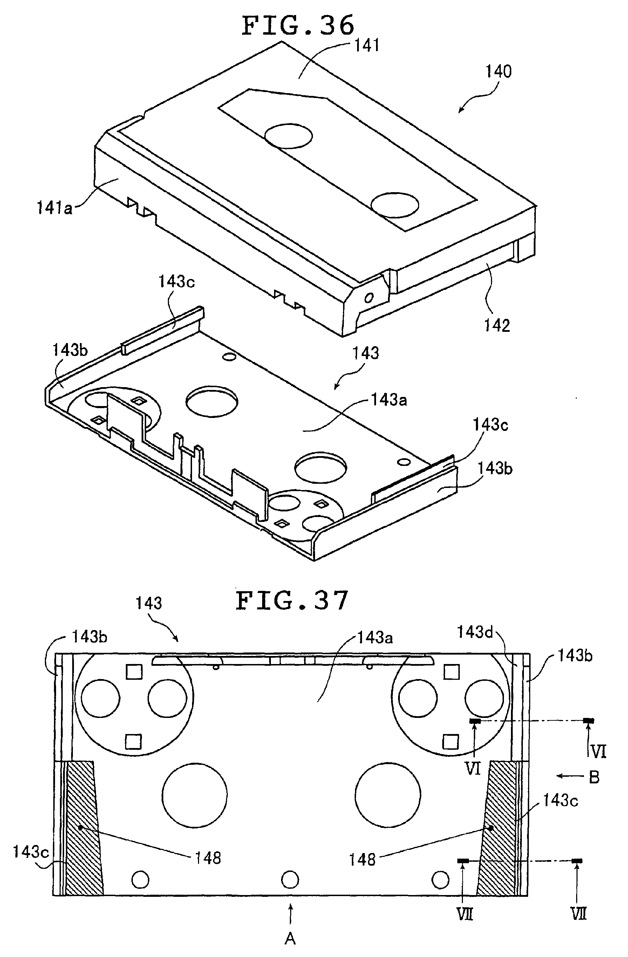

Fig. 36 shows an example of such a magnetic tape cassette. A body of a magnetic tape cassette 140 is composed of an upper half 141 and a lower half 142 coupled in a lid-mating manner. Because a high density recording is performed on the magnetic tape, in particular in order to prevent a finger from touching a magnetic tape or dust from attaching thereto, it is necessary to improve sealability of the casing. Therefore, a front lid (lid) 141a for covering a front surface side from which the above-described magnetic tape is exposed, is provided at the upper half 141.A slider 143 for covering the lower surface side of the cassette case is mounted on an outer lower surface of the lower half 142.

As shown in Fig. 36, the slider 143 is provided with side walls 143b, 143b extending vertically from a rectangular bottom surface 143a (horizontal surface) on both right and left ends of the bottom surface, havingg a U-shape. Dust preventing wall portions 143c, 143c that are thin elongated parallelepiped members are partially provided at upper ends of the side walls 143b, 143b. These portions are engaged with the side walls of the lower half 142 to prevent the slider 143 from dropping out from there and to improve dust-proof effect, thereby facilitating smooth sliding motion of the slider 143.

Generally, the slider is manufactured by injection molding of thermoplastic resin such as POM, PS, ABS or the like. Usually, this molding is performed by injecting molten resin into a space formed by molding operation using such as a movable side mold (core) and a stationary side mold (cavity).

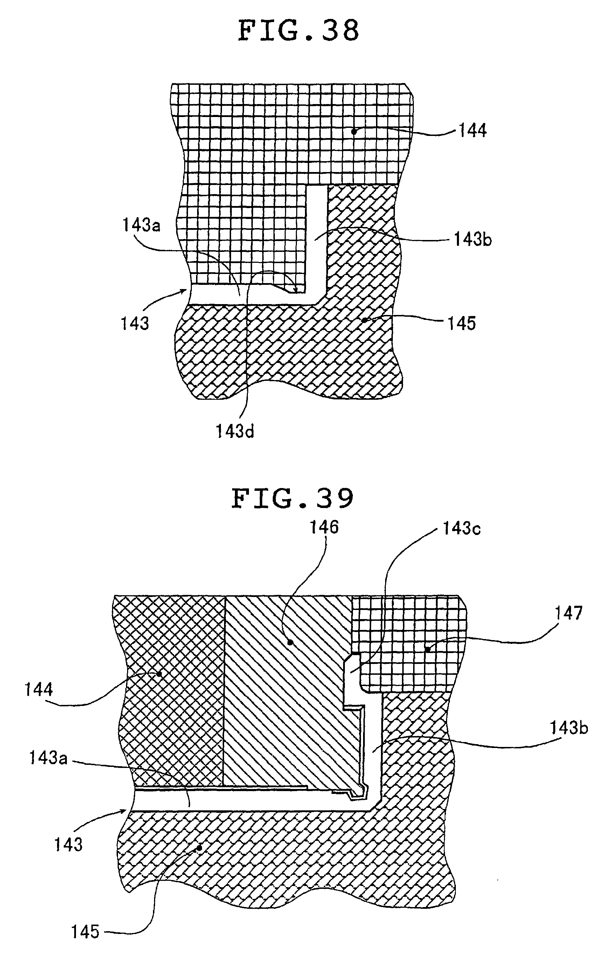

Fig. 37 is a plan view of the slider 143. Fig. 38 shows a state in which a portion of a cross-section taken along the line VI-VI of side wall 143 of slider 143 is molded by molding. As shown in Fig. 38, the slider 143 is formed by injecting molten resin into a space between a main core (movable side mold) 144 and a cavity (stationary side metal mold).

However, after completion of molding, when the molds are opened and the molded article is held on the core side and is removed from the mold using a projecting pin, in a case of a substantially U-shaped and plate-shaped molded article such as the above-described slider, there is a problem that warpage phenomenon in which the side walls are tilted inwardly and the bottom surface portion is bulged might be apt to occur, resulting in obtaining a defective article.

Then, in order to prevent the side walls 143b from being tilted, for example, countermeasure of providing grooves 143d at proximal ends of the side walls 143b or the like had been adapted. However, this could not overcome the problem completely.

Further, with respect to the portions of the side walls 143b having a shape as shown in Fig. 38, the main core 144 may move upwardly to open the molds. However, with respect to a portion of the cross-section taken along the line VII-VII of Fig. 37, as in the state of molding with molds as shown in Fig. 39, the mold cannot be movedd upwardly because the dust-proof portion 143c is present at the upper end of the side wall 143b. Accordingly, a slide core 146 moving laterally is needed. Namely, as shown in Fig. 39, mold for molding the L-shaped bent portion formed by the side wall 143b and the dust-proof wall portion 143c is formed by a slide core 146 and a side core 147 in addition to a main core 144 and a cavity 145. The slide core 146 moves in the lateral direction (in a direction normal to the drawing plane). In the plan view of Fig. 37, each portion corresponding to the slide core 146 is represented by shaded portions 148. In Fig. 37, the slide core 146 moved downwardly of the paper surface of the drawing.

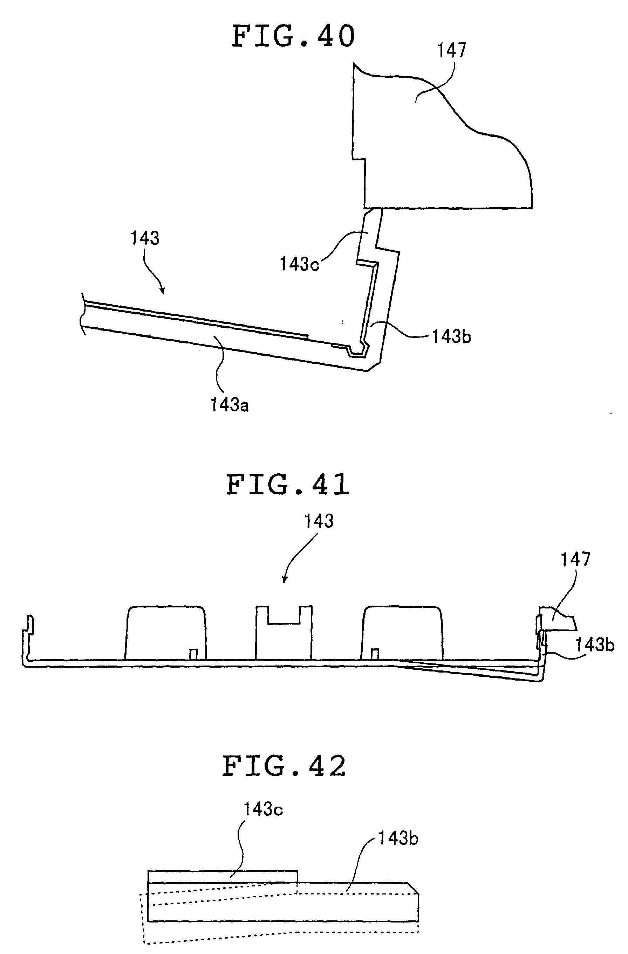

In Fig. 39, after molding, first of all, the slider core 146 is removed laterally and the main core 144 and the side core 147 are moved upwardly. Then, because the slide core 146 has already been removed as shown in an enlarged view of the side wall 143b and the side core 147 in Fig. 40, the side wall 143b (and dust-proof wall portion 143c) is held by the main core 144 as shown in Fig. 38 and therefore the force for retaining the side wall 143b is made to be decreased. As a result, in some cases, the side wall 143b (end portion of the dust-proof wall portion 143c) may happen to ride over the side core 147. The ride of the side wall 143b over the side core 147 is not essentially preferable as described below.

Then the state of the slider 143 as viewed in a direction as indicated by the arrow of Fig. 37 is shown in Fig. 41. Fig. 41 shows a state in which the right side wall 143b rides over the side core 147 and is bent with respect to only the side wall 143b on the right side. The situation is the same Further for the left side wall. Fig. 42 shows a state of the condition of the side wall 143b at this time as viewed from in a direction indicated by the arrow B of Fig. 37. Because only the portion of the dust-proof wall portion 143c rides over the side core 147, the side wall 143b is deformed as indicated by the dotted lines in Fig. 42.

Because the side wall 143b rises over the side core 147, the side wall 143b is rubbed by an edge of the side core 147 to bring about damaging or curling. When damaging or curling is generated in the side wall 143b of the slider, this may cause malfunction. Especially, if curling is generated at an edge of the dust-proof wall portion 143c, this causes sliding defect of the slider 143 or assembling defect of the cassette.

Furthermore, conventionally, when a letter such as a name of a maker, a name of a product, a product type, and a size, or figures such as logotype marks are displayed on a plastic portion having a thin plate portion having a small thickness of 1.5 mm or less, such as an upper half, a lower half, a slider and a front lid constituting a magnetic tape cassette, a concave pattern or a convex pattern is stamped in advance onto the mold. The molding material is molded using this mold to form a convex or a concave portion of desired letters or figures on the molded article surface, thereby forming a stamped portion.

However, when such a stamped portion is displayed on a surface of the molded article, if the letters or figures are concave, it is difficult to recognize the letters or figures and it is impossible to sufficiently satisfy function of display. On the other hand, if they are displayed in a convex shape, when there is a member brought into sliding contact with the molded article during operator's using, there occurs a problem that the stamped portion is hooked at that member or a problem that thickness of the displayed portion is increased even in a case of formation of a thin molded article, with the result that thinning processing is quite rendered meaningless.

Then, in order to overcome the above-noted problems, a method is taken in which a concave groove portion is once provided at a surface of the molded article and the letters or figures are molded in a convex manner within the groove portion to form the stamped portion. The molded article with the stamped portion through the conventional stamping method will now be described with reference to Fig. 33 and Figs. 43A to 44B. Fig. 33 is an exploded perspective view illustrative of an example of main constituents of a magnetic tape cassette as an example of a plastic molded article to which a stamp is applied.

For example, in a magnetic tape cassette such as a DAT, a DDS or the like known as a recording medium for recording digital signals at a high density on a magnetic tape, as shown in the above-described Fig. 33, a box member is constituted in a lid mating manner and is mainly formed by an upper half 100 and a lower half 102 for forming a casing of a magnetic tape(cassette case), a slider 104 provided in contact with the bottom surface of the lower half 102 from outside and mounted slidably back and forth and a magnetic tape 108 wound around a take-up hub 106.

As shown in Fig. 33, in the magnetic tape cassette, both end portions of the elongated strip-shaped magnetic tape 108 are fixed to a pair of take-up hubs 106, 106, and the magnetic tape 108 are wound around the respective take-up hubs 106, 106 from its both end portions. The pair of hubs 106, 106 on which the magnetic tape 108 are wound is accommodated in the cassette case obtained by coupling the upper half 100 and the lower half 102 in a lid-mating manner so as to keep the pair of take-up hubs 106, 106, around which the magnetic tape 108 is wound, rotatable. The magnetic tape 108 between the pair of take-up hubs 106, 106 is suspended through a predetermined path, so that only the projecting portion 108a of the magnetic tape corresponding to a position of the magnetic head of the recording and reproducing apparatus (not shown) will be able to be exposed to the outside.

In order to prevent a finger from touching a magnetic layer surface of the magnetic tape 108a of the projecting portion capable of being exposed from this cassette case or preventing dust from sticking thereto, a front lid 112 pivoted about pins is provided in the upper half 100 so as to swing between the closing position for covering the magnetic tape 108a of a projecting portion and an opening position for exposing the tape.

A gear 106a formed integrally with a top end face of the take-up hub 106 is provided at the take-up hub 106. This gear 106a engages with a brake piece 110a of a brake member 110 assembled in the upper half 100 to retain rotation in a direction in which the magnetic tape 108 is loosened and serves to prevent occurrence of loosening of the magnetic tape 108 due to vibration, shock or the like upon delivery or handling of the magnetic tape cassette while it is not used. A pair of brake pieces 110a is engaged with the gears 106a of the associated take-up hubs 106, respectively. The brake member 110 is spring-biased backwardly toward the take-up hubs 106 by a brake spring (not shown) composed of a torsion coil spring fitted around a pin (not shown) provided on the upper half 100.

When the magnetic tape cassette is not being used, the brake member 110 is located at a stop position for stopping rotation of the take-up hub 106 while the braking pieces 110a are engaged with the gears 106a by biasing force of the brake spring (not shown). When the cassette is loaded into the recording and reproducing apparatus, the front surface lid 112 is rotated by the recording and reproducing apparatus, the brake arms 110b provided to extend forwardly from both right and left ends of the brake member 110 and engage with the front surface lid 112, and the brake pieces 110a are separated away from the gears 106a and moved to the release position where the take-up hubs 106 can be rotated.

The lower half 102 has a bottom surface 102a of a rectangular shape. The take-up hub 106 is rotatably supported to the bottom surface 102a. When the magnetic tape cassette is loaded into the recording and reproducing apparatus, a reel shaft (not shown) is inserted into the take-up hub 106 from the recording and reproducing apparatus. The lower half has reel shaft insertion holes 102b, 102b for drivingly rotating the take-up hubs 106. Both right and left ends of the bottom surface 102a are projecting portions 102c, 102c extending forwardly. A space between the projecting portions 102c, 102c is directed to a space into which a so-called tape loading device is advanced, provided on the recording and reproducing apparatus (deck) side into which the magnetic tape cassette is loaded is advanced.

The slider 104 has a thin planar bottom surface 104a provided from below-side in contact with a bottom surface 102a of the lower half 102 and a pair of reel shaft insertion holes 104b, 104b provided in this bottom surface 104a and is slidably guided in a direction indicated by an arrow B-C by side walls of the lower half 102.

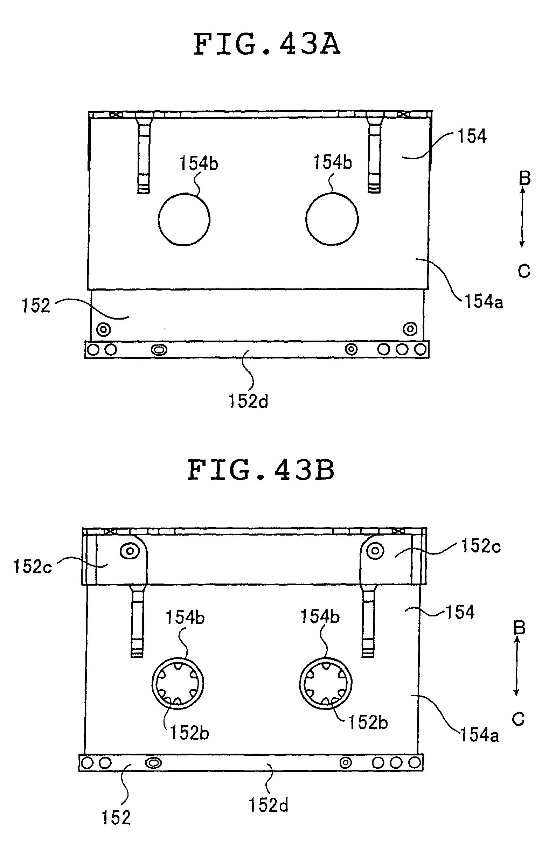

Fig. 43A is a schematic bottom view of the magnetic tape cassette in a closed position where the slider 104 is slidingly moved in the direction indicated by the arrow B, and Fig. 43B is a schematic bottom view of the magnetic tape cassette in an open position where the slider is moved in the direction indicated by the arrow C. The slider 104 is biased by a slider spring (not shown) and moved in the direction B. Namely, the slider is moved to a closed position to close the space (opening portion) between the projecting portions 102c, 102c provided in the lower half 102 and the reel shaft insertion holes 102b, 102b by the bottom surface 104a for preventing dust from invading thereinto. Then, the slider is moved in the direction C, that is, moved in the open position to open the opening portion of cassette case so that the positions of reel shaft insertion holes 102b, 102b provided in the bottom surface 102a of the lower half 102 and the reel shaft insertion holes 104b, 104b provided in the bottom surface 104a of the slider 104 are mutually coincident, whereby the tape loading device of the recording and reproducing apparatus and the reel shafts become insertable thereinto.

Here, walls 102d are provided at the lower half 102 and when the slider 104 is slidingly moved in the direction C, the slider 104 and the walls 102d are brought into contact with each other thereby defining the stop position of the slider 104.

Reel shaft coupling holes 106b into which the reel shafts (not shown) provided in the recording and reproducing apparatus are inserted and connected for drivingly rotating the associated take-up hubs 106 are provided in lower end portions of the take-up hubs 106. As above-described, these reel shafts are inserted into the reel shaft coupling holes 106b of the take-up hub 106 through the reel shaft insertion holes 104b, 102b provided in the slider 104 and the lower half 102 and connected to the take-up hubs 106, thereby drivingly rotating the hubs. The magnetic tape 108 is wound around one of the take-up hubs 106 so that the magnetic tape 108 fed from the other take-up hub 106 is moved in contact with the magnetic head of the recording and reproducing apparatus at the magnetic tape tensioning portion 108a to record information onto the magnetic tape or reproduce information from the magnetic tape.

Because a magnetic tape cassette is a precisely fabricated article provided with the above-described structure, particularly high dimensional precision is required for the upper half 100, the lower half 102, the slider 104 and the front lid 112 constituting the magnetic tape cassette. In particular, in assembling a magnetic tape cassette and the like, in order to form the box by the coupling in a lid-mating manner, and Further in using the magnetic tape cassette and the like, in order to protect the magnetic tape 108 to be accommodated in the cassette case, and in the members slidingly contacting or contacting, in order to avoid the resin wear or rattling, these components need to have desired dimensions after molding.

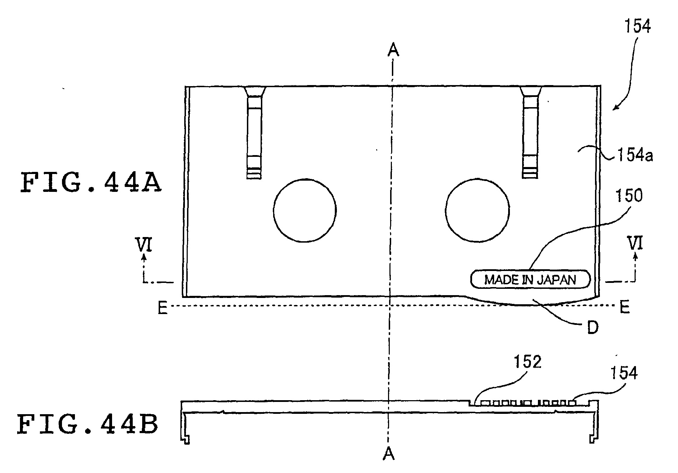

Figs. 44A and 44B are a schematic bottom view and a schematic cross-sectional view taken along the line VI-VI of the slider of the conventional magnetic tape cassette provided with the stamped portion indicating a production country, respectively. It should be noted that the "bottom surface" means the back side of the surface in contact with the lower half 102. A display portion 150 composed of the stamped portion 154 indicating the country of production and a groove portion 152 is provided on the back surface of the bottom surface 104a of the slider 104. The groove portion 152 is a recessed groove with both ends being rounded, and the stamping portion 154 is for forming letters "MADE IN JAPAN" in a convex form within the groove portion 152.

Because the stamping portion 154 provided on the back surface of bottom surface 104a of conventional slider 104 is molded with the letters or figures in a convex manner, it becomes easy to distinguish it. In addition, because a thickness of the bottom surface 104a in the stamped portion 154 is substantially the same as or smaller than a thickness of the bottom surface 104a except for the stamped portion 154, other members no longer hook the stamped portion 154 and a thickness of the bottom surface 104a is no longer increased.

However, thus the display portion 150 is composed of the groove portion 152 and the stamped portion 154 formed within the groove portion 152. That is, because the groove portion 152 is provided in a surface of the bottom surface 104a, a thickness of the bottom surface 104a is further decreased at the groove portion 152. Therefore, when the plastic molded article is cooled down, shrinkage of the groove portion 152 completes earlier than shrinkage of other portions of the bottom surface 104a and a peripheral portion of the groove portion 152 is likely to extend due to molding shrinkage difference generated between the groove portion 152 and a portion other than the groove portion. Dimensions of the bottom surface 104a and the other portion are different from each other so that a distortion is likely to occur. Such a distortion is small at approximately 0.02 mm/37 mm when thickness of the thin plate portion is at 1 mm. However, for example, an extension portion like a region D shown in Fig. 44A is likely to occur around the groove portion 152. Such an extension portion is first brought into contact with the wall 102d of the lower half 102 indicated by the dotted line E-E. Thereby, there occurs a problem that rattling or displacement takes place.

On the other hand, it might be possible to take an approach to improve dimensional precision by pre-forming the molding material on the molds in advance and providing the stamped display. However, because it is complicated to machine the molds, it has become difficult to improve dimensional precision in the molded article that requires precision.

Therefore, a molded article stamping method is desired, that can keep a higher dimensional precision by a simple mold structure and a molded article is desired, which is good in balance in dimensional precision and which is subjected to no resin wear or rattling in use or assembling.

Further, as above-described above, in the magnetic tape cassette, the opposite ends of the rectangular strip-shaped magnetic tape are fixed, and the pair of take-up hubs around which the magnetic tape is wound or the take-up reels are accommodated in the casing (halves) that only exposes the portion of the magnetic tape suspended between the two hubs. Furthermore, the cassette is provided with a front lid (lid) that is rotatably pivoted between a position for covering the magnetic tape at a portion exposed from the half in order to protect the magnetic layer surface of the magnetic tape and an opening position making the magnetic tape expose and biase to a closed position.

Then, the above-described front lid is rotated to the open position interlocking with the loading of the magnetic tape cassette to the recording and reproducing apparatus. One take-up hub or the like is rotated so that the magnetic tape is fed from the other take-up hub or the like. The magnetic head of the recording and reproducing apparatus or the like is brought into contact with the above-described exposed magnetic tape to record information onto the magnetic tape or to reproduce the information from the magnetic tape.

In the above-described magnetic tape wound around the take-up hubs, in some cases, there may occur winding loosening due to vibration, shock or the like during delivery and a tape is discharged inch by inch to cause loosening between the two take-up hubs. Then, when the magnetic tape as this loosening state stands is loaded in the recording and reproducing apparatus under this condition, the loosened magnetic tape sometimes causes extension of the magnetic tape or breakdown of the recording and reproducing apparatus.

In view of this, a magnetic tape cassette has been developed, having a brake device (brake member) for surely stopping rotation of the take-up hubs when the magnetic tape is not being used. For example, the brake device used in a DDS cassette, a DAT cassette or the like is composed of gears formed integrally with top end faces of the respective take-up hubs of the magnetic tape coaxially with each of the hubs and a brake member movable between a braking position for prohibiting the rotation in the winding loosening direction of the take-up hubs while engaging each of the take-up hubs and a release position for allowing rotation of the above-described take-up hubs while separating away from the gears. This brake member is normally spring-biased at the braking position. When the magnetic tape cassette is loaded into the recording and reproducing apparatus, the front lid is rotated to the opening position, interlocking with that motion, and the brake member is moved to the release position by a projection projecting from a part on the inner side of this front lid, so that the take-up hubs becomes rotatable and the magnetic tape can be used.

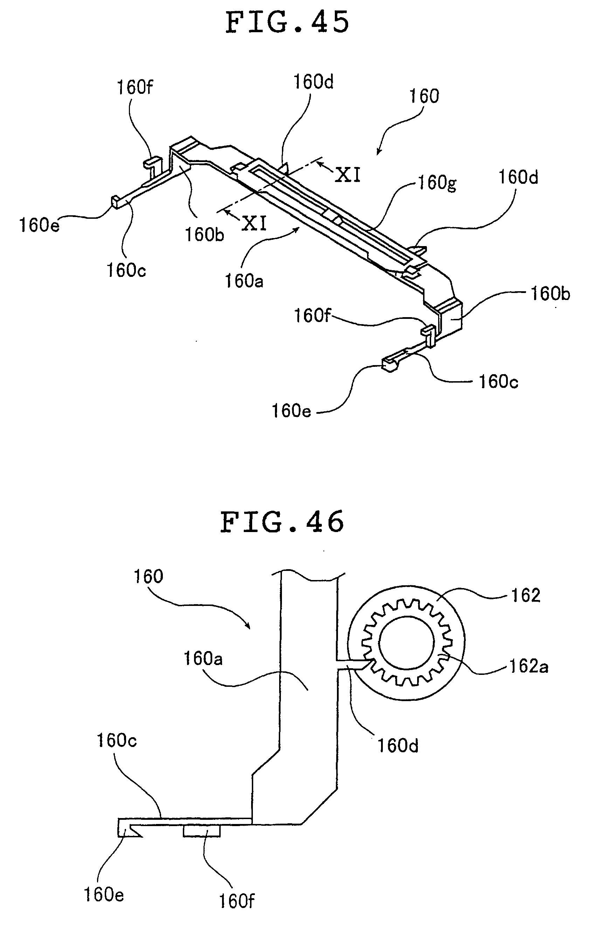

Fig. 45 is a perspective view showing a conventional brake member 160. Fig. 46 is a plan view showing the brake member 160 and one of the take-up hubs 162. The brake member 160 is composed of an elongated and rectangular strip plate-shaped horizontal plate portion 160a, leg portions 160b formed integrally vertically with both ends in the longitudinal direction thereof and elongated brake arms 160c extending in the vertical direction with respect to the above-described longitudinal direction and in the horizontal direction from the leg portions 160b. Braking pieces 160d engaging the gears 162a provided at the take-up hubs 162 for prohibiting the rotation of the take-up hubs 162 are provided in the horizontal planar portion 160a.

Further, hook portions 160e for engaging the projections on the front lid (not shown), accompanying with rotation of the front lid are provided at the brake arms 160c. A tip end of a rib forming a portion extending normally to each brake arm 160c is vertically bent to form a horizontal portion. Contact portions 160f having an L-shape defined by a vertical portion and a horizontal portion thus formed is provided on the way of the brake arms. These contact portions 160f are brought into contact with the projections of the front lid when the front lid is in the closing position for covering the magnetic tape. Thus, even if any shock is applied to the cassette case, the brake member 160 is moved forwardly, thereby releasing the retention of the take-up hubs 162 to allow the take-up hubs 162 to rotate, thereby preventing the tape from being loosened.

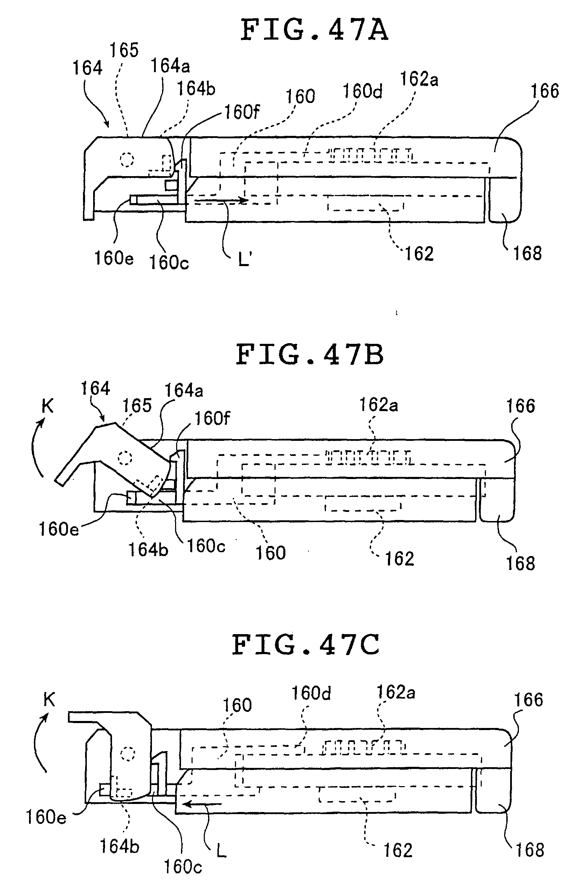

Figs. 47A to 47C are transparent side-elevational views of the cassette case for illustrating operation of the front lid 164 and the brake member 160. In Figs. 47A to 47C, reference numeral 166 denotes an upper half and numeral 168 denotes a lower half. When the magnetic tape cassette is not loaded into the recording and reproducing apparatus (not shown), the brake member 160 is biased in a direction indicated by the arrow L' by the brake spring (not shown). The tip end potion of brake piece 160d of the brake member 160 is engaged with the gear 162a of the take-up hub 162 to prohibit rotation of the take-up hub 162 (see Fig. 47A). And, when the front lid 164 is in the closing position, the end face of the projection 164b provided in the side wall 164a of the front lid 164 is brought into contact with the contact portion 160f provided in the midway of the brake arm 160c of the brake member 160 to prevent the brake member 160 from moving to a release position for allowing the take-up hubs 162 to rotate owing to shock or the like.

On the other hand, when the magnetic tape cassette is loaded into the recording and reproducing apparatus, as shown in Fig. 47B, the front lid 164 is rotated in the direction indicated by the arrow K about the pivot shaft 165 and the front lid 164 is moved to a position other than the closing position and thus the projection 164b provided on each side plate 164a of the front lid 164 lies away from the contact portion 160f of the brake member 160 and the brake member 160 is engaged with the gear 162a of the take-up hub 162 only with the spring force of the brake spring. Furthermore, when the front lid 164 is further rotated and the rotational angle reaches a predetermined angle, the projection 164b of the front lid 164 is brought into contact with the hook portion 160e at the tip end of the brake arm 160c.

As shown in Fig. 47C, in accordance with further rotation of the front lid 164, each projection 164b hooks the hook portion 160e, thereby moving the brake member 160 in the direction indicated by the arrow L to a release position. Thus, the brake piece 160d is released from the gear 162a to release brake of the take-up hub 162. When the magnetic tape cassette is taken out from the recording and reproducing apparatus, the non-loading condition, i.e., the closing condition of the front lid 164 is obtained by the operation opposite to the above-described operation so that the brake member 160 is returned back to a braking condition to prevent rotation of the take-up hub 162.

Thus, the brake member 160 is moved back and forth by rotation of the front lid 164. In order to perform this movement smoothly, conventionally, many approaching methods have been devised.

For instance, in the example shown above, in Fig. 45, a continuous longitudinal rib (sliding convex portion) 160g is provided on a horizontal plate portion of the brake member 160. This may be slidingly moved on and along the upper half bottom surface.

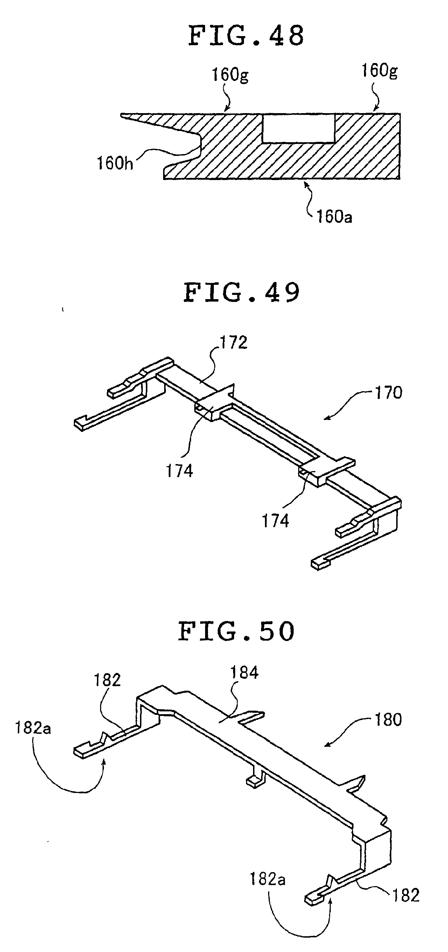

Fig. 48 is a cross-sectional view taken along the line XI-XI of Fig. 45. As shown in Fig. 48, thickness is thicker corresponding to the sliding convex portion 160g and a top surface in the drawing is slidingly moved on and along the upper half. Additionally, a recess portion 160h is a spring hook portion for receiving the brake spring for biasing the brake member 160 to a braking position.

Further, in an example shown in Fig. 49, ribs (sliding convex portions) 174 are formed at an interval on the surface facing a bottom surface of the upper half, of the horizontal plate portion 172 of the brake member 170.

Further, in an example shown in Fig. 50, bottom surfaces 182a of the brake arms 182 of the brake member 180 are slidingly moved on and along the bottom surface of the lower half.

In any of these cases, it is necessary to provide the ribs or the like corresponding to the half sliding with the brake member or to provide a spring hook portion for receiving the brake spring for biasing the brake member for a braking position.

However, in the brake member 160 shown in the above-described Fig. 45 in which the surface continuous to the surface facing the bottom surface of the upper half is provided on the horizontal plate portion 160a and the sliding convex portion 160g is formed, it is possible to improve rigidity between the brake arms. Nevertheless, the change in thickness between the sliding convex portion and the outside portion thereof is remarkable and deformation due to difference in molding shrinkage is likely to occur. Therefore, both end portions of the horizontal plate portion is deformed inwardly, and there is a problem to cause sliding drawback of sliding of the brake member. Unless the brake member slidingly moves correctly, there might be fear that the magnetic tape is not correctly driven and a serious breakdown is caused.

Further, in the brake member 170 in which the sliding convex portions 174 are provided at an interval on the horizontal plate portion 172 as shown in Fig. 49, thickness between the brake arms is easily made uniform but it is difficult to keep rigidity sufficient, and deformation due to impact upon dropping, maintained conditions of, for example, vibration and high temperature/high humidity is likely to occur. Accordingly, there is still a problem in that deformation causes drawback of sliding of the brake member.

Furthermore, in the brake member 180 in which the bottom surface 182a of the brake arm 182 and the bottom surface of the lower half are mutually sliding as shown in Fig. 50, the horizontal plate portion 184 forms a ceiling portion with its inner surface Further serving as an upper limit to the magnetic tape and is not brought into contact with the upper half. The thickness is uniform, but rigidity is low.

Further, because the sliding surface with a lower half is formed at the bottom surfaces 182a of the brake arms 182, the brake arms 182 must be located between the opposite walls of the sliders and the lower half. Accordingly, thickness of the brake arms 182 is limited and rigidity of the brake arms 182 is low.

In this case, it is possible to increase rigidity of the above-described horizontal plate portion 184. However, due to restrictions on the mounting position of the brake arms 182, it is difficult to improve rigidity thereof. Accordingly, if the pressurization occurs under being shocked or changed as to the temperature/humidity condition and its force is reserved, deformation would occur. Thus, there is a problem in that it causes sliding fault of the brake member.

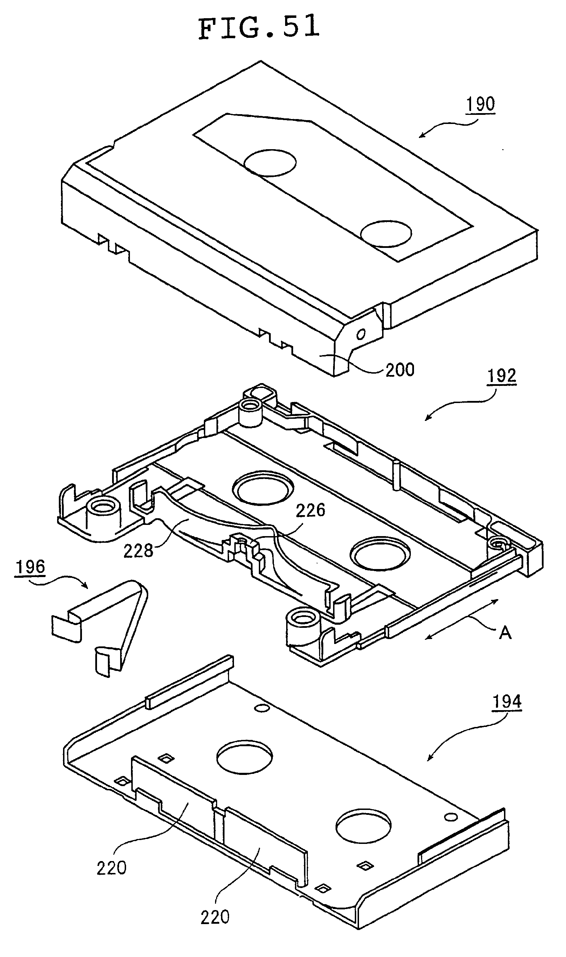

Furthermore, in a product composed of various parts, in order to bias the parts for performing various operations such as opening and closing, rotation, engagement, sliding movement and sliding contact in a predetermined direction, various springs such as coil spring or plate springs are used. For instance, a magnetic tape cassette such as a DAT, a DDS or the like known as a recording medium for recording digital signals at a high density on a magnetic tape, as shown in Fig. 51, has an upper half 190, a lower half 192 coupled with the upper half 190 to form a casing and a slider 194 slidably fitted in the direction indicated by the arrow A along a bottom surface and side surfaces of the lower half 192. The magnetic tape is accommodated within the casing. In this magnetic tape cassette, when the magnetic tape is not being used, the slider 194 is biased forwardly by a slider spring composed of a plate spring or the like disposed in the lower half 192 (the slider spring 196 composed of a substantially U-shaped plate spring in the magnetic tape cassette shown in the drawing).

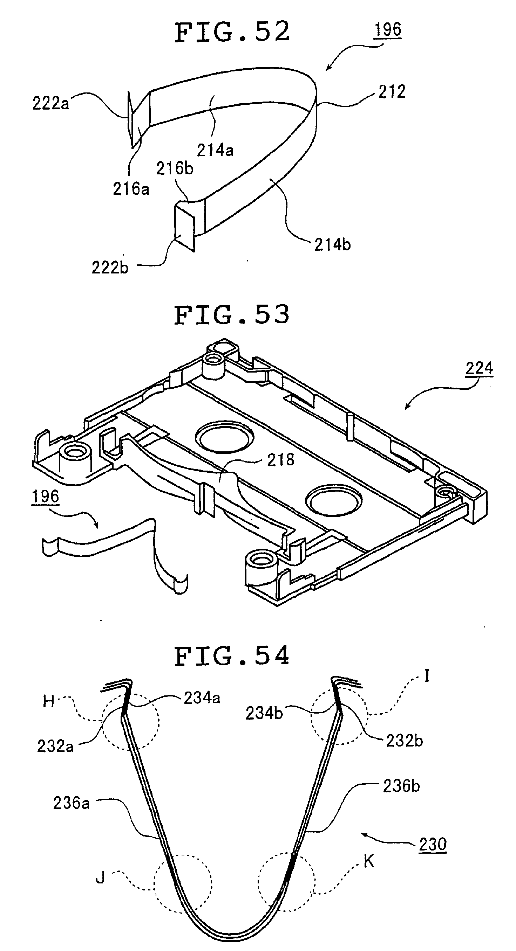

As shown in Fig. 52, the plate spring used as the slider spring 196 in the magnetic tape cassette shown in Fig. 51 is a substantially U-shaped spring that has a central bent portion 212, a pair of arm portions 214a and 214b extending like a substantially V-shape on both right and left sides of the central bent portion 212 and a pair of leg portions 216a and 216b formed at tip ends of the arm portions 214a and 214b. In the slider spring 196 composed of this plate spring, the central bent portion 212 is mounted at a slide spring engagement portion 226 provided in a central portion of a front edge of the lower half 192. Further, the leg portions 216a and 216b have sliding contact portions 222a and 222b bent outwardly in contact with the contact wall 220 standingly provided in a front end portion of the slider 194.

With this slider spring 196, when using the magnetic tape, in accordance with the rearward sliding movement of the slider 194, the sliding portions 222a and 222b are moved slidingly on and along the contact wall 220 outwardly, respectively to open to increase an angle defined between the two arm portions 214a and 214b. In forward sliding movement of the slider 194, the slider 194 is biased forwardly in a direction toward inside end of the front lid 200. And the opening angle of the above-described spring is at approximately 30 degrees when no load is applied to the slider spring 196 at all. The angle becomes approximately 160 degrees when the slider 194 is retracted to open the slider spring 196 at maximum.

The plate spring such as a slider spring or the like is generally formed from a plate member through shaping machining operation such as punching and pressing, bending and the like and stored, delivered and fed to the assembling process. Several tens of such plate springs are overlapped, or overlappingly loaded in a magazine to be fed to an automatic assembling line, and thereafter are separated one by one by a parts feeder or a separator as desired and fed to an automatic assembling apparatus. For example, in an automatic assembling line of the magnetic tape cassette shown in Fig. 51, several tens of slider springs are overlapped or overlappingly loaded into the magazine and are separated one by one by the parts feeder or the separator if desired to be aligned and fed to the automatic assembling apparatus. The spring is assembled from the top side of the lower half to the slider spring retainer portion 226 opened upwardly of the lower half 192.

In the magnetic tape cassette shown in Fig. 53, the slider spring 196 is assembled from the bottom surface side of the lower half to the slider spring retainer portion 218 provided to be opened downwardly in the central portion of the front edge of the lower half 224.

Note that, the slider spring 196 in the magnetic tape cassette having such a slider 194 needs a predetermined biasing force in forward and backward movement of the slider 194. Conventionally, the plate spring has been mainly designed by appropriately selecting between various parameters such as material for the plate (including material of the plate subjected to the process such as tempering), hardness, thickness of the plate, bending angle of the spring, width of the plate so that the opening angle of the spring has a desired biasing force (spring force) over a range of approximately 30 to 160 degrees. For example, if thickness of the plate is too thin, the suitable spring force of the spring cannot be obtained. Inversely, if the thickness of the plate is too thick, the spring force is too strong so that operation of the parts biased by the plate spring becomes somewhat worse. Further, if hardness of the plate spring is small, it is impossible to keep a suitable elasticity and a serious trouble may occur such that the spring is plastically deformed so that the plate spring is kept opened at any time but is not returned back to the original shape when the plate spring is opened.

Recent demand for a used plate spring has been becoming diverse as various sizes of the magnetic tape cassette or the like on which the plate spring is to be mounted are available on a market. Further, as described above, this plate spring has to be available in the wide opening range (0 to 180 degrees), while due to the size of the magnetic tape cassette or the like on which the spring is to be mounted and the space for accommodating the spring, dimension of the plate spring (thickness of a plate, width of a plate and bending angle of spring) is limited. Accordingly, in order to design the plate spring having a spring force capable of keeping an angle of the spring open, it is necessary to select suitable ones from the factors such as material (including the material of the plate which has been subjected to a process such as tempering), hardness, rigidity and the like. As a result, the plate made of material that is high in hardness and rigidity is used as the material. It is inevitable to use high-cost material such as alloy or the like.

Further, if such a high hardness plate is used as material, a cutter blade of a press machine for performing punching or the like is worn by a short period when the plate is formed into a desired shape of the plate spring. For this reason, there is a problem that a cycle for maintenance is shortened and productivity is reduced.

Further, bending work is needed for making the plate punched into a desired shape, as the plate spring having a desired bending angle. However, if the high rigidity plate is used, it becomes difficult to perform the bending work. There is Further a problem that the productivity is not improved.

On the other hand, in some cases, the above-described substantially U-shaped plate springs would be mutually overlapped and attachingly stuck. For instance, as shown in Fig. 54, in some cases, in a conventional plate spring 230, specific phenomenon, i.e., embracing phenomenon occurs in which portions where the bending portions 234 or 234b of the two leg portions 232a or 232b are mutually overlapped (portions indicated by H and I in Fig. 54) or the linear-shaped portions where the two arm portions 236a or 236b are overlapped with each other (portions indicated by J and K in Fig. 54) occurs. For such plate springs subjected to embracing, it is difficult to separate them even using the parts feeder or separator. Further, it is difficult to detect overlapping state.

Further, when assembling a plate spring like this in an automatic assembling apparatus, when parts are to be fed in alignment by the parts feeder, in some cases, the leading and trailing plate springs are mutually overlapped, so that the feed to the automatic assembling apparatus is faulty. Thus, if a plurality of plate springs is fed to the automatic assembling apparatus while the plate springs are mutually overlapped or stuck, this might cause defects such as a defective product and breakdown of the apparatus.

Further, as shown in Fig. 52, in the plate spring having the conventional shape, it is difficult to align the conventional springs within the parts feeder owing to its shape. This might become hindrance against feeding of parts in an automatic assembling line.

As described above, in designing the plate springs, there are various kinds of constraints and it is difficult to ensure a degree of freedom in design.

### DISCLOSURE OF THE INVENTION

In view of the foregoing defects inherent in the conventional art, it is a first object of the present invention to provide a magnetic tape cassette that suppress deformation of a slider and improves sliding reliability of the slider with high dimensional precision.

Further, it is a second object of the present invention to provide a magnetic tape cassette that may overcome the above-described problems of the conventional art, prevent dust, which is capable of preventing foreign matters or the like from invading from an opening portion formed when the slider is located in the forward position, sufficiently securing the magnetic tape winding space at maximum, and making smooth the flow of molten resin in modes upon molding without causing problems in molding.

Further, in view of the above defects inherent in the conventional art, it is a third object of the present invention to provide a molding method of a slider which improves mold-ability and appearance of the slider including a dust-proof wall without degrading the dimensional precision of the slider.

Further, it is a fourth object of the present invention to provide a stamping method of a molded article which overcomes the above problems of the conventional art and may overcome degradation of dimensional precision generated owing to the molding shrinkage difference between the stamped portion and the other portion than the stamped portion when the plastic molded article such as a magnetic tape cassette or the like having a thin plate portion such as a slider or a lower half or the like is formed and to provide a plastic molded article such as a magnetic tape cassette or the like which has a thin plate portion including a groove portion in a surface and a stamped portion formed within the groove portion and is superior in balance as to dimensional precision.

Further, in view of the above defects inherent in the conventional art, it is a fifth object of the present invention to provide a magnetic tape cassette that prevents deformation owing to the molding shrinkage difference of the brake member, thereby improving rigidity between brake arms to avoid the generation of the sliding fault.

Further, in view of the above defects inherent in the conventional art, it is a sixth object of the present invention to provide a plate spring in which a throttle portion is provided at the plate spring to improve rigidity, so that degree of freedom in selecting the material of the plate spring and therefore the degree of freedom in designing the plate spring can be increased, thereby reducing the cost for the plate spring and making the press machining easy to reduce the number of maintenance for the press machine to improve productivity.

Furthermore, in addition to the sixth object of the present invention, it is another object of the present invention to provide a plate spring by which in delivery, storing or automatic assembling, a plurality of plate spring are mutually overlapped and stuck to avoid embracing phenomenon. Even if the springs are partially overlapped, it is possible to detect the overlapping state with ease and it is possible to easily perform alignment of the springs by a parts feeder or the like.

In order to attain the above-described first object, according to a first aspect of the present invention, there is provided a magnetic tape cassette in which:
an opening portion into which a tape loading device may be inserted is provided in a bottom surface of a casing;
a slidable slider for opening and closing the opening portion is provided in both outer sides of the bottom surface so as to face the bottom surface;
an elastic lock piece having an engagement head portion that may be swung up and down is formed in at least one position on the bottom surface of the casing; and
a through-hole with which the engagement head portion of the elastic lock piece engages so that the slider is locked under an opening condition and a closing condition of the opening portion, and furthermore in which:
   a substantially rectangular concave groove contacting the engagement head portion of the elastic lock piece engaged with the through-hole for guiding a lock release member provided in a recording and reproducing apparatus for releasing the lock condition is formed in the longitudinal shape in a loading direction of the tape cassette in the surface of the slider not facing the casing; and
   an axle in the longitudinal direction is mold of synthetic resin formed at a position substantially overlapping with the axle of the elastic lock piece in the loading direction of the tape cassette, characterized in that a concave portion extending in the sliding direction of the slider is provided a back surface of the surface in which the above-described substantially rectangular concave groove is formed, in the vicinity of a portion corresponding to a position of the substantially rectangular concave groove.

Note that, regarding the shape of the concave groove described above, it has a length which at least corresponds to that of the above-described substantially rectangular concave groove, and a variety of shapes such as a slit or a groove may be adopted therefor.

Preferably, the concave groove has a depth corresponding to 10 to 70% with relative to a full thickness of the slider.

Furthermore, the shape of the above described concave groove in the longitudinal direction may have various configurations. For example, it may be of a uniform shape, one which continuously changes in the sliding direction of the above-described slider, or one which changes stepwise in that direction. Additionally, it is preferable that a length of the above-described recessed groove is not shorter than the above-described recessed groove in the sliding direction of the above-described slider.

In the tape cassette according to the present invention, a new "warpage" is generated by the above-described recessed groove but such "warpage" is generated to offset the "warpage" of the overall structure.

In order to attain the above-described second object, according to a second aspect of the present invention, there is provided a magnetic tape cassette comprising an upper half, a lower half coupled with the upper half to form a casing and a slider that is fitted slidably back and forth of the casing along a bottom surface and side surfaces of the lower half, wherein engagement sliding portions fitted into sliding grooves formed between right and left side walls of the lower half and right and left side walls of the upper half and having lower surfaces for engaging and slidingly contacting with the right and left side walls of the lower half are arranged at inner edges of upper ends of both right and left side walls of the slider, characterized by comprising a dust-proof wall which is formed by extending the rear ends of the engagement sliding portions of the slider toward a rear side wall of the lower half so as to close a gap between the upper half and the lower half in an inner deep portion of an opening formed on the lower portion on both sides of the casing between the rear side walls of the lower half and rear ends of the right and left side walls of the slider when the slider is in the forward position.

In order to attain the above-described third object, according to a third aspect of the present invention, there is provided a method of forming a slider of a magnetic tape cassette by injecting molding, the slider of the magnetic tape cassette having side walls formed in an upright state in a rectangular horizontal surface at both right and left ends of the horizontal surface, characterized in that at least upper and lower end faces of vertical wall surfaces of a side core of molds for molding the side walls are rounded, so that the side walls ride over the side wall when the molds are opened after molding.

Here, it is preferable that polishing is performed well so as not to leave lateral abrasive trace in a vertical wall surface of a main core and the vertical wall surface of the side core of the molds for molding the side walls, and that when the molds are opened after molding, a force for holding the side wall of the slider on the movable mold side is made small.

In order to attain the above-described fourth object, the present inventors et. al. have found that, in view of the fact that the local thickness change becomes a factor to destroy the molding balance of a plastic molded article as a whole, when a groove portion and a stamped portion composed of convex letters and/or figures to be provided within the groove portion are provided in the thin plate surface of the plastic having the thin plate portion, the groove portion is provided symmetrically with respect to a centerline of the thin plate portion in the longitudinal direction, thereby making it possible to overcome the degradation in dimensional precision that is caused by the molding shrinkage difference, whereby it is possible to improve the balance in dimensional precision of the plastic after molding, and it is possible to prevent the generation of rattle or peeling off of resin during assembly or use of the molded article and have thus made the invention.

That is, according to a first mode of a fourth aspect of the present invention, there is provided a molded article stamping method of forming a molded article having a thin plate portion, in which at least one groove portion is formed in the thin plate portion and at least one convex stamped portion is formed in the groove portion, characterized in that the groove portion is formed symmetrically with respect to a centerline in a longitudinal direction of the thin plate portion.

In this case, it is preferable that the above-described groove portion intersects with the above-described centerline and the sum of the length(s) of the above-described groove portion(s) formed on the same line in the longitudinal direction is not less than 50% of the full length in the longitudinal direction in the molding position. Further, if the average thickness of the above-described thin plate portion is not greater than 1.5 mm, the effect of the present invention becomes more remarkable.

Further, according to a second mode of the fourth aspect of the present invention, there is provided a molded article characterized in that the molded article comprises a thin plate portion, at least one groove portion formed in the thin plate portion and a stamped portion formed in at least one groove portion, and the groove portion is formed symmetrically with respect to a centerline in a longitudinal direction of the thin plate portion.

In order to attain the above-described fifth object, according to a fifth aspect of the present invention, there is provided a magnetic tape cassette comprising:
an upper half and a lower half coupled in a lid mating manner to form a cassette case for receiving a pair of take-up hubs around which a magnetic tape is would so that only a portion of the magnetic tensioned between the pair of take-up hubs is exposed;
a front lid pivoted rotatably between a closing position for covering the magnetic tape at the exposed part and an opening position for exposing the magnetic tape, having projections inside side walls and biased by a spring toward the closing position;
a brake member having a rectangular strip-shaped horizontal plate portion provided with brake pieces for preventing rotation of take-up hubs by being engaged with gears provided on the take-up hubs and Further for allowing the rotation of the take-up hubs by releasing the engagement with the gears; leg portions formed integrally and vertically at both ends in a longitudinal direction of the horizontal plate portion; and brake arms extending from the leg portions in the vertical direction and in the horizontal direction to the longitudinal direction and having at their tip ends hook portions for engaging with the projections of the front lid in accordance with the rotation of the front lid, the brake member being slidable between a braking position where the rotation of the take-up hubs is prohibited and a release position where the rotation of the take-up hubs is allowed and biased to the braking position by a spring,
characterized in that a continuous convex portion is formed in the horizontal plate portion of the brake member, a top surface of the convex portion is used as a sliding surface with the upper half, and thickness reducing portions are provided on a surface opposite to the sliding surface so as to keep substantially constant a thickness of the brake member.

In order to attain the above-described fifth object, the present inventors et. al. have found that in a plate spring comprising a central bent portion, arm portions extending substantially in a V-shape on both right and left sides of the central bent portion and leg portions bent outwardly at both tip ends of the arm portions, in addition to factors conventionally known as determining the spring force of a plate spring, providing a drawn portion in at least a part of plate surfaces of the central bent portion and arm portions of the plate spring becomes a factor in determining the spring force, and thus devised the present invention.

That is, a plate spring according to the present invention, which comprises a central bent portion, arm portions extending substantially in a V-shape on both right and left sides of the central bent portion and leg portions bent outwardly at both tip ends of the arm portions, is characterized in that a drawn portion is provided in at least a part of plate surfaces of the central bent portion and arm portions.

Here, it is preferable that at least one above-described drawn portion is provided so as to extend in the longitudinal direction of the plate surfaces of the plate spring.

Further, it is preferable that the drawn portion is provided in plate surfaces of the arm portions in the vicinity of the above-described central bent portion so as to be symmetrical with respect to the central bent portion.

Further, when the plate spring according to the present invention is used as a slider spring of a magnetic tape cassette such as a DAT, a DDS or the like, it is preferable that the plate spring is adapted such that the spring force is in the range 15 to 150 gf when an angle defined by the two arms extending in the V-shape is in the range of 30 to 160 degrees. Further, it is preferable that the thickness of the plate is in the range of 0.05 to 0.2 mm and the Vickers hardness is not smaller than 450 mHV.

Further, in this case, it is preferable that the above-described drawn portion is a convex portion on the inside of the plate spring.

### BRIEF DESCRIPTION OF THE DRAWINGS

Fig. 1 is a schematic exploded perspective view of a magnetic tape cassette in accordance with one embodiment of a first aspect of the present invention.
Fig. 2 is a perspective view of a bottom surface side of a slider shown in Fig. 1.
Fig. 3 is a cross-sectional view showing an assembled condition of the slider and a casing shown in Fig. 1.
Fig. 4A is an enlarged cross-sectional view of a primary part showing an engagement condition of an elastic lock piece shown in Fig. 1.
Fig. 4B is a partly enlarged cross-sectional view of a primary part of the slider shown in Fig. 1.
Fig. 5 is a perspective view of a slider in accordance with another embodiment of the present aspect.
Fig. 6 is a perspective view of a slider in accordance with still another embodiment of the present aspect.
Fig. 7 is a perspective view of a slider in accordance with still another embodiment of the present aspect.
Fig. 8 is a cross-sectional view illustrative of a change in a depth direction of a groove of the slider in accordance with the embodiment shown in Figs. 1 to 3 and Fig. 7.
Fig. 9 is a cross-sectional view illustrative of the change in the depth direction of the groove of the slider in accordance with the embodiment shown in Fig. 5.
Fig. 10 is a cross-sectional view illustrative of the change in a depth direction of a groove 25b of the slider in accordance with the embodiment shown in Fig. 6.
Fig. 11 is an exploded outer appearance view of β CAM cassette represented as a reference.
Figs. 12A and 12B are a top surface view and a bottom surface view of a lower half of the β CAM cassette shown in Fig. 11, respectively.
Fig. 13 is a perspective view illustrative of a lower half and a slider in one embodiment of a magnetic tape cassette in accordance with a second aspect of the present invention.
Fig. 14 is a perspective view of the slider in accordance with one embodiment of a magnetic tape cassette of the present aspect.
Fig. 15A is a side elevational view enlarging and showing the vicinity of a portion of a dust-proof wall provided in the slider of the magnetic tape cassette according to the present aspect in Fig.15A.
Fig. 15B is a plan view showing the same portion.
Fig. 16 is an exploded perspective view showing a schematic structure of a magnetic tape cassette including a slider formed through a molding method in accordance with a third aspect of the present invention, in accordance with one embodiment of a fifth aspect of the present invention.
Fig. 17 is a cross-sectional view showing a state where a side wall portion of a slider is formed in accordance with this embodiment.
Fig. 18 is a front view showing a state when the side wall portion rides over a side core when the slider is molded in the embodiment.
Figs. 19A and 19B are a schematic back surface of a molded article molded with a stamp in accordance with one embodiment of a molded article stamping method in accordance with a fourth aspect of the present invention and a schematic cross-sectional view taken along the line I-I, respectively.
Figs. 20A and 20B are a schematic back surface of a molded article molded with a stamp in accordance with one embodiment of a molded article stamping method in accordance with the present aspect and a schematic cross-sectional view taken along the line II-II, respectively.
Figs. 21A and 21B are a schematic back surface of a molded article molded with a stamp in accordance with one embodiment of a molded article stamping method in accordance with the present aspect and a schematic cross-sectional view taken along the line III-III, respectively.
Fig. 22 is a perspective view enlargingly showing a brake member in accordance with a fifth aspect of the present invention shown in Fig. 16.
Fig. 23 is a plan view of the brake member shown in Fig. 22 as viewed from above.
Fig. 24 is a bottom surface view of the brake member shown in Fig. 22 as viewed from below.
Fig. 25 is a cross-sectional view taken along the line V-V of Fig. 23.
Fig. 26 is a bottom surface view as shown in Fig. 25 and showing another example of the brake member according to the present embodiment.
Fig. 27 is a cross-sectional view showing a state of the molding the brake member by molds in accordance with the present embodiment.
Fig. 28A is a perspective view of one embodiment of a slider spring that is a specific example of a plate spring according to a sixth aspect of the present invention.
Fig. 28B is a developed view of the slider spring before bending work.
Fig. 29A is a schematic view showing a method of measuring a spring force.
Figs. 29B, 29C and 29D are views illustrative of the case where a spring opening angle is at approximately 30 degrees, the case where the spring opening angle is at approximately 60 degrees and the case where the spring opening angle is at approximately 160 degrees, respectively.
Fig. 30A is a diagram showing a relationship between bending angles of the slider spring shown in Fig. 28A and the conventional slider spring and spring force at a first loading point.
Fig. 30B is a diagram showing a relationship between the bending angles of the slider spring shown in Fig. 28A and the conventional slider spring and spring force at a second loading point.
Fig. 31 is a view illustrative of the effect of the overlapping prevention in the slider springs that is a specific example of the plate springs of the present aspect.
Fig. 32 is a perspective view showing a structural example of a slider in the conventional tape cassette.
Fig. 33 is an exploded perspective view showing primary component members of the conventional magnetic tape cassette.
Fig. 34 is a side elevational view of the conventional magnetic tape cassette.
Fig. 35 is a perspective view illustrative of the slider and the lower half of the conventional magnetic tape cassette.
Fig. 36 is a perspective view illustrative of the slider and a body of the conventional magnetic tape cassette.
Fig. 37 is a plan view showing the slider shown in Fig. 36.
Fig. 38 is a cross-sectional view showing a state of molds for molding a portion of a cross-section of a side wall taken along the line VI-VI of Fig. 37.
Fig. 39 is a cross-sectional view showing a state of molds for molding a portion of a cross-section of the side wall taken along the line VII-VII of Fig. 37.
Fig. 40 is a frontal view showing a state when the side wall portion rides over a side core when the slider is molded in the conventional molding method.
Fig. 41 is a frontal view showing a state of deformation of the slider in accordance with the conventional molding method.
Fig. 42 is a side elevational view showing the state of deformation of the slider shown in Fig. 41.
Fig. 43A is a schematic back surface view of a magnetic tape cassette in the closing position of the slider shown in Fig. 33.
Fig. 43B is a schematic back surface view of the magnetic tape cassette in the opening position of the same slider.
Figs. 44A and 44B are a schematic back surface view of a conventional molded article provided with a stamped portion and a schematic cross-sectional view taken along the line VI-VI, respectively.
Fig. 45 is a perspective view showing the conventional brake member.
Fig. 46 is a plan view showing the function of the conventional brake member.
Figs. 47A, 47B and 47C are side elevational views showing the functions of the conventional brake member and front lid, respectively.
Fig. 48 is a cross-sectional view taken along the line XI-XI line of Fig. 45.
Fig. 49 is a perspective view showing another example of the conventional brake member.
Fig. 50 is Further a perspective view showing another example of the conventional brake member.
Fig. 51 is a view illustrative of an assembly of the slider spring showing a main constituent example of the conventional magnetic tape cassette.
Fig. 52 is a perspective view illustrative of the structure of the conventional slider spring.
Fig. 53 is a view illustrative of an assembly of the slider spring showing a main constituent example of the conventional magnetic tape cassette.
Fig. 54 is a view illustrative of improving a state of the conventional slider springs.

### BEST MODE FOR CARRYING OUT THE INVENTION

A magnetic tape cassette, its parts, a molding method of the parts, a stamping method of molded article and a molded article according o the present invention will now be described in detail on the basis of a preferred embodiment shown in the drawings.

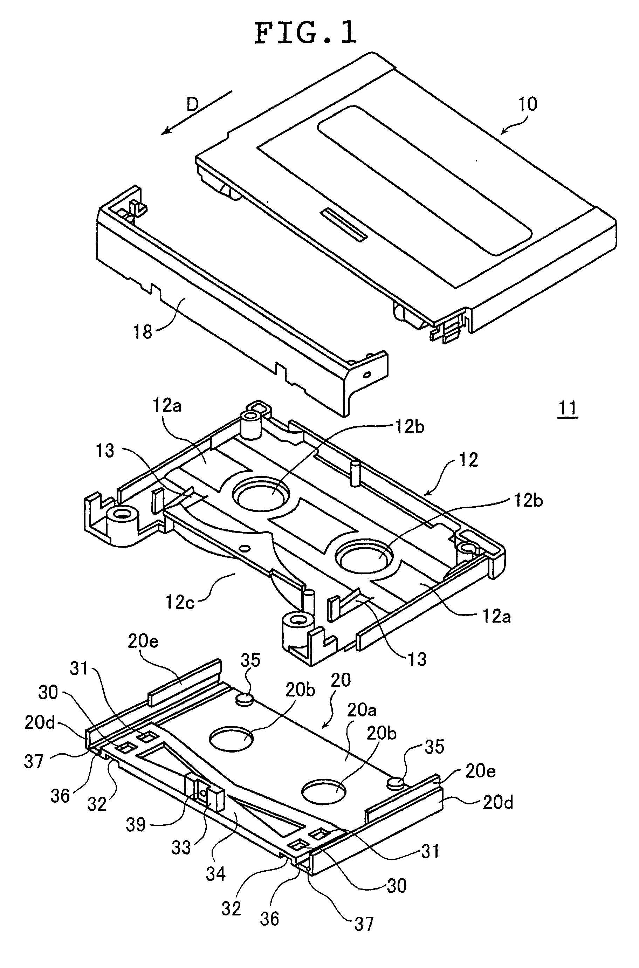

First, an embodiment mode of a magnetic tape cassette according to a first aspect of the present invention will be described in detail with reference to Figs. 1 to 12.

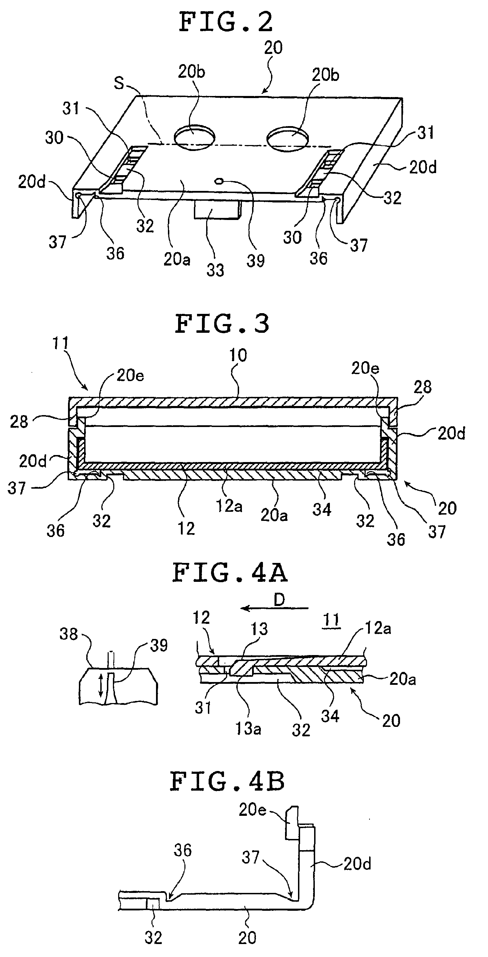

Fig. 1 is a schematic exploded perspective view of a magnetic tape cassette in accordance with one embodiment of the present invention. Fig. 2 is a perspective view showing a slider of the same tape cassette on a bottom surface side. Fig. 3 is a cross-sectional view showing the same tape cassette.

The magnetic tape cassette is provided with a flat box-shaped casing 11 obtained by coupling an upper case (hereinafter referred as an upper half) 10 and a lower case (hereinafter referred to as a lower half) 12 and a slider 20 mounted slidably on the lower surface side of this casing 11.

A magnetic tape is wound around hubs (not shown) on both sides and accommodated in an interior of the above-described casing 11. A central portion of a bottom portion of a front portion in a loading direction D to the recording and reproducing apparatus is removed together with a front surface portion from a bottom surface 12a formed in the above-described lower half 12 to form an opening portion 12c for the tape loading. Further, the front portion of the upper half 10 is opened at the front surface portion in the same manner. A front lid 18 is rotatably arranged to be upright on the front side of this front surface opening portion and is opened/closed in accordance with the loading to the recording and reproducing apparatus.

A tape loading device (not shown) of the recording and reproducing apparatus is insertable from below into the opening portion 12c of the bottom surface of the above-described lower half 12. The tape is drawn forwardly to perform the recording and reproducing. Additionally, a pair of drive shaft insertion holes 12b are opened on both sides in the lower half 12.

The above-described slider 20 openes and closes the bottom surface opening portion 12c of the lower half 12 of the above-described casing 11 in accordance with the back-and-forth sliding movement of the tape cassette in the loading direction D. This slider 20 is composed of a flat plate portion 20a composed of a bottom surface in parallel with the bottom surface 12a of the lower half 12 and side wall portions 20d in an upright condition on both sides. The overall structure is integrally formed of synthetic resin.

Engagement sliding portions 20e serving as pull-apart preventing pieces from extending upwardly are provided on the above-described side wall portions 20d and as shown in Fig. 3, are insertable into slits in coupling portions defined between the upper half 10 and the lower half 12 to be slidable back and forth with their movement being limited.

A length of the flat plate portion (bottom surface) 20a of the above-described slider 20 in the sliding direction is formingly set to be shorter than the length of the casing 11 in the back-and-forth direction. When the slider is moved forwardly, the front end portion is coincide to the front end position of the casing 11 to close the above-described opening portion 12c. When the slider is moved backwardly, the slider fully open the opening portion 12c. Then, the driving shaft insertion holes 20b are opened in the slider 20 in the same manner in the position identical with that of the drive axle insertion holes 12b of the lower half 12. Additionally, the center position of these drive shaft insertion holes 20b is formed to be offset rearwardly of the centerline S in a direction perpendicular to the sliding direction of the slider 20.

A lock mechanism for locking the above-described slider 20 in each of the opening position and the closing position is provided in the lower half 12. This lock mechanism is composed of elastic lock piece 13 of the lower half 12 and through-holes 30, 31 of the slider 20. The above-described elastic lock pieces 13 are integrally formed in one position or more in the bottom surface 12a of the above-described lower half 12 (one on each side in the case shown).

As shown in Fig. 4A, the proximal ends of the elastic lock pieces 13 are connected to the lower half 12, and the distal end portions are separated from the lower half 12 and elastically deformable. Hook-shaped engagement head portions 13a are formed downwardly at the tip ends to be swingable up and down. These engagement head portions 13a are provided to project further downwardly from the bottom surface 12a of the lower half 12 and to be engageable with the through-holes 30, 31 of the slider 20.

The two through-holes 30 and 31 are formed in a rectangular shape through the flat plate portions 20a of the slider 20 back and forth of each of the right and left sides. Namely, the front side through-hole 30 engaged with the engagement head portion 13a in the position where the slider 20 opens the opening portion 12c and moved backwardly and the rear side through-hole 31 engaged with the engagement head portion 13a in the position where the slider 20 closes the opening portion 12c and moved forwardly are provided on each side and the movement of the slider 20 is locked by the engagement of the two components in the respective positions.

The locking state of engagement between the engagement head portion 13a of the above-described elastic lock piece 13 and the above-described through-holes 30, 31 is released using a push-up piece 38a of a lock release member 38 (see Fig. 4A) provided in the recording and reproducing apparatus into which the tape cassette is loaded. This lock release member 38 is guided by a guide groove 32 composed of a recess groove having a rectangular shape in cross section and formed in the bottom surface of the slider 20. The push-up piece 38a that has been elevated is brought into contact with the engagement head portion 13a of the elastic lock piece 13 engaging with the above-described through-hole 30, 31 opened being coincide to this guide groove 32, thereby releasing engagement. Additionally, the front end portion of the above-described guide groove 32 is formed to spread over in the right and left direction (see Fig. 2).

The above-described guide groove 32 is provided in an elongated shape in the loading direction D of the tape cassette. An axle in the longitudinal direction thereof is formed at a position substantially overlapped with an axle of the above-described elastic lock piece 13 in the loading direction D. The rear end portion of this guide groove 32 is provided particularly forwardly of the centerline S (see Fig. 2) perpendicular to the sliding direction of the slider 20 in the position forward from the center of the drive axle insertion holes 20b.

A convex region 34 having such a height that comes into sliding contact with a rear surface (lower surface in the drawing) of the bottom surface 12a of the lower half 12 is formed on the top surface of the flat plate portion 20a of the slider 20 in a peripheral portion including the molded range of the guide grooves 32 and the above-described through-holes 30, 31, that is, the surface on the side facing the bottom surface of 12a of the lower half 12 of the slider 20, so as to surround a portion on which the guide grooves 32 are projected. Then, the above-described slider 20 is brought into sliding contact with the rear surface of the bottom surface 12a of the lower half 12 through above-described convex region 34.

The above-described convex region 34 projectingly extends in the form of a plurality of convex groove shapes radially about, for example, a resin injection gate 39 sideways or obliquely backwardly from the front side tip end of the slider 20. The formation region is that the rear extending end 34a of the convex region 34 is within such a region that does not exceed the above-described centerline S in the direction perpendicular to the sliding direction of the slider 20 (See Fig. 1). Further, this convex region 34 includes the portion obtained by projecting the above-described substantially rectangular guide grooves 32.

By forming the above-described convex region 34, thickness of the flat plate portion 20a of the slider 20 is thicker than that of the other portion in the peripheral portion except for the guide grooves 32 and is smaller in the portions of the guide grooves 32. In order to prevent deformation such as the "warpage" of the slider 20 due to such a change in thickness, in the tape cassette in accordance with this embodiment, a recess-shaped portion (recess portion) for preventing the "warpage" such as described below is provided.

That is, as shown in Figs. 1 to 3, particularly as shown in a partially enlarged view of Fig. 4B, a recess-shaped portion (recess portion) having a triangular shape in cross-section, i.e., a warpage preventing groove (hereinafter simply referred as a groove) 36 is formed over a full length of the slider 20 in the sliding direction in a thin portion of a rear surface of a surface where the above-described guide grooves 32 are provided (i.e., the top surface in Figs. 1 and 3 and the lower surface in Fig. 2).

Each groove 36 like this is provided whereby the "warpage" of the slider 20 due to the change in thickness of the portion of the above-described guide grooves 32 is offset to make it possible to provide a molded article without any "warpage" as a whole.

Additionally, the distal ends of the engagement head portions 13a engaging with the above-described through-holes 30, 31 are located within the guide grooves 32 (in the height direction) so as not to project downwardly from the lower surface of the slider 20.

A retainer member 33 at which a spring (not shown) for biasing the slider 20 in the closing direction is hooked and which has the resin injection gate 39 upon molding is provided in the front end central portion of the slider 20.

Assist projections 35 having tip ends that may be brought into contact with the bottom surface of the lower half 12 are formed on the right and left sides on the top surface, in the vicinity of the rear end portion of the slider 20 to prevent rattling upon sliding movement from generating. These assist projections 35 have the same height as that of the above-described convex region 34. Further, the tip ends of these assist projections 35 may be bent surfaces, such as planar surface and spherical shape. Additionally, with respect to the height of the above-described convex region 34, for example, the projection amount from the peripheral portion is in the range of approximately 0.05 to 0.3 mm.

The normal general operation of the above-described tape cassette will be hereinafter explained. First of all, before loading to the recording and reproducing apparatus, the slider 20 is in the forward position to close the bottom surface opening portion 12c. Under this state, the engagement head portions 13a of the elastic lock pieces 13 are locked so that the engagement head portions 13a are out of engagement with the rear side through-holes 31 not so as to perform the opening operation.

Accompanying with the loading to the recording and reproducing apparatus, the lock release members 38 are inserted from the front end portions of the guide grooves 32 and release the engagement of the engagement head portions 13a engaging with the rear side through-holes 31 by operation of the push-up pieces 38a, to make the slider 20 movable and to move the slider 20 rearwardly relative to the casing 11, accompanying with the loading operation to open the bottom surface opening portion 12c. The engagement head portions 13a of the elastic lock pieces 13 are engaged with the front side through-holes 30 at the backward position to lock the release position. The tape loading device is inserted into the opened opening portion 12c to draw out the tape forwardly to make it possible to record and reproduce.

When the magnetic tape cassette is taken out after usage, the lock release member 38 is moved relatively forwardly to release the engagement of the engagement head portions 13a of the elastic lock pieces 13 engaging the front side through-holes 30 by the operation of the push-up pieces 38a. The slider 20 is moved in the closing direction by the biasing force of the spring to close the opening portion 12c. In such movement of the slider 20, the above-described grooves 36, the convex region 34 and the assist projections 35 are formed to obviate the problems such as the "warpage" upon molding or the like and to keep sliding characteristics splendid.

That is, first, with respect to the above-described convex region 34, because the convex portion 34 is formed so that the thickness of the peripheral portion of each guide groove 32 is thinkened, the resin is caused to flow smoothly earlier due to the portion of the guide groove 32. For this reason, it is possible to suppress the problems of molding faults such as strains or "warpage" due to the fluidization faults.

Further, with respect to the grooves 36, unless these are provided, because the portion of the guide groove 32 is thin, upon molding the slider 20, the resin fed from the above-described resin injection gate 39 flows around so as to bypass this portion. At this portion, the resin flow is largely changed. The flow onward has large turbulence and thus the "warpage" occurred in the slider 20. Accordingly, it is possible to think that the provision of the grooves 36 had an effect to cancel turbulence of the resin flow by the guide groove 32.

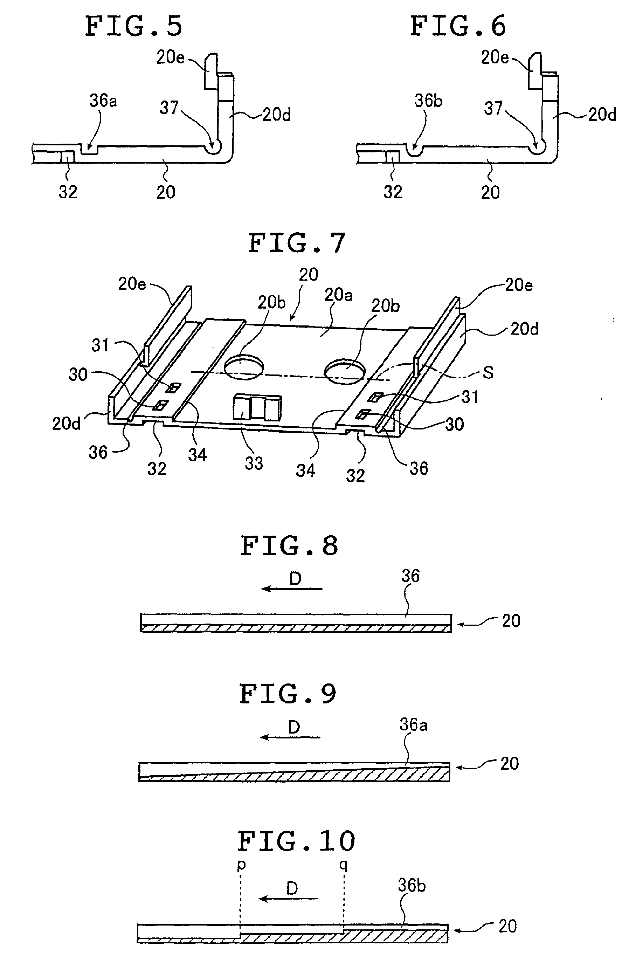

Fig. 5 shows another embodiment in which the groove 36a is in the form of a rectangular shape. The construction other than this is the same as the above-described embodiment. Additionally, in this embodiment, the same reference numerals are used to indicate the like components and the explanation therefor will be omitted.

Fig. 6 shows still another embodiment in which the groove 36b is in the form of a semicircular shape. The construction other than this is the same as the above-described embodiment. Additionally, Further in this embodiment, the same reference numerals are used to indicate the like components and the explanation therefor will be omitted.

Fig. 7 shows still another embodiment in which the like groove 36 as shown in Fig. 1 is added to the slider 20 shown in Fig. 32. Additionally, in this embodiment, the same reference numerals are used to indicate the like components and the explanation therefor will be omitted.

In the foregoing embodiments, the grooves 36 (36a, 36b) are formed in the full width in the sliding direction of the slider 20. However, the present invention is not limited thereto. For example, the grooves 36 (36a, 36b) may have a length corresponding to the portion where the above-described guide grooves 32 are present in the sliding direction of the slider 20.

Further, the depth of the grooves 36 shown in Figs. 1 to 3 and Fig. 7, the grooves 36a shown in Fig. 5 and the grooves 36b shown in Fig. 6 can be embodied in various ways as shown in cross-sections of Figs. 8 to 10.

That is, it is possible to effectively use one having a uniform depth as shown in Fig. 8, one having a depth that is changed in a constant rate as shown in Fig. 9 or one having a depth that is changed stepwise as shown in Fig. 10.

In these cases, the depth of the groove is deeper on the front side in the above-described loading direction D into the recording and reproducing apparatus and is shallower on the rear side. Further, in the case where the depth is to change stepwise, in view of the fluidization of the resin upon molding, for example, in the case where the depth is divided into three steps, it is preferable that a position p where the first step is formed is in a rear end portion of the convex region 34 (see Figs. 1, 5 and 6) and a position 9 where a second step is provided is in the rear end portion of the drive axle insertion holes 20b (see the same).

In addition to the specific examples shown in Figs. 8 to 10, it is possible to use one having a depth that is changed in a bent manner or it is possible to select ones variously with respect to the number of the steps or a height thereof in the case where the depth is changed stepwise.

Further, of course, these factors may be used in combination for a specific shape and it is possible to apply the shape variously in view of the fluidization of the resin upon molding.

Additionally, one indicated by reference numeral 37 in Figs. 1 to 6 is a tilt preventing groove for reducing deformation after molding the side wall portions 20d on both sides of the slider 20 (referred as "tilt" because the wall portions are normally tilted inwardly). Further, the shape of the tilt preventing groove 37 is not limited to a circular shape as shown in Figs. 1 to 3 and Figs. 5 and 6 but it is possible to use a somewhat angular shape as shown in Fig. 4B.

The substantially rectangular concave guide grooves that have been described above are provided Further in other magnetic tape cassettes, such as a β CAM cassette (L-type) used in, for example a broadcasting station. The purpose of these grooves are to be used for positioning with respect to the apparatus for recording and reproducing in the same manner as in the cassette according to the present invention.

Further with respect to this β CAM cassette, because the formation of such grooves encounters the problems as described above, it is possible to apply the structure according to the present invention thereto.

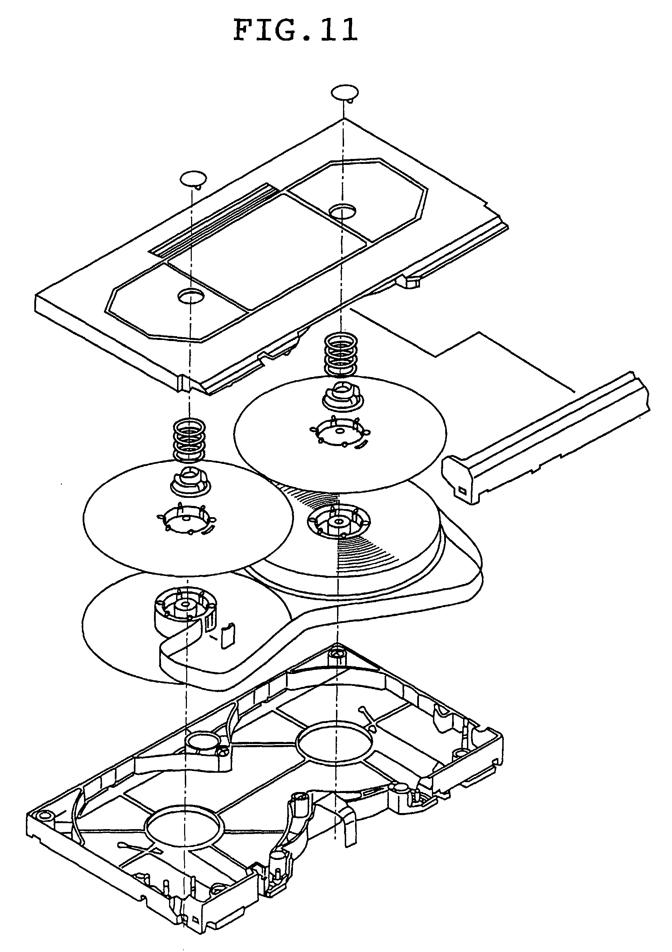

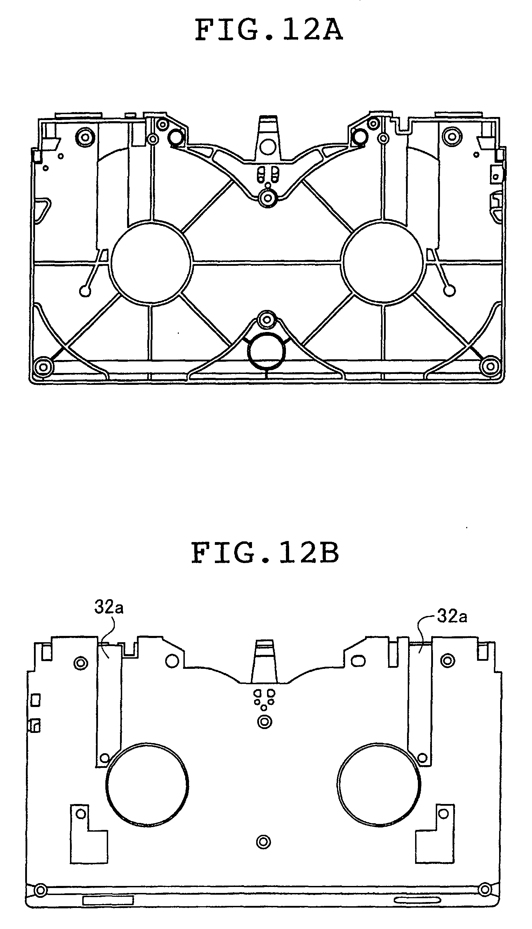

Fig. 11 is an exploded outer appearance view of the above-described β CAM cassette. Further, Figs. 12A and 12B are plan views of the lower half thereof. Fig. 12A is a top surface view and Fig. 12B is a lower surface view. Ones indicated by reference character 32a in Fig. 12B are grooves corresponding to the guide grooves 32 described above.

The magnetic tape cassette according to the first aspect of the present invention is basically constructed as above-described.

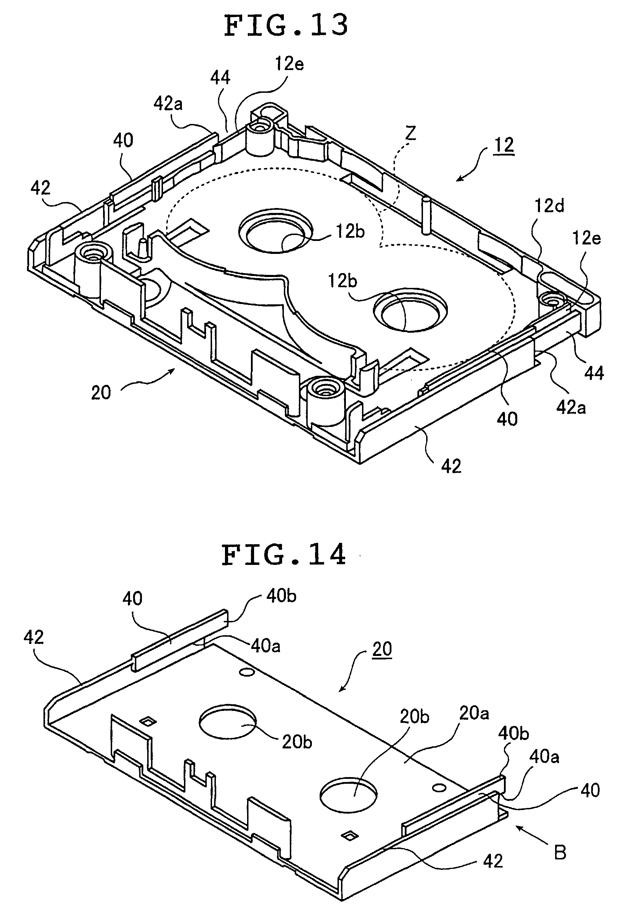

One embodiment of a magnetic tape cassette according to a second aspect of the present invention will now be basically described with reference to Figs. 13 to 15.

The magnetic tape cassette according to the second aspect of the present invention (hereinafter simply referred to Further as a cassette) is mainly composed of an upper half, a lower half coupled with the upper half to form a casing, a slider fitted slidably in the back-and-forth direction of the casing along the bottom surface and the side surfaces of the lower half and a magnetic tape accommodated in the casing. The slider has engagement sliding portions, fittingly inserted into the sliding grooves formed between right and left side walls of the upper half and right and left walls of the lower half, at an upper end inner edge of the both right and left side walls thereof. The engagement sliding portions are elongated members having lower surfaces engaging and slidingly contacting right and left side wall top surfaces of the lower half.

In the cassette according to this aspect, this engagement sliding portions have dust-proof walls with the rear ends being formed to extend toward the rear side wall of the lower half. These dust-proof walls are constructed to close a gap between the lower half and the upper half in the inner deep portion of the opening portion formed in the lower portion on each side of the casing between the rear side wall of the lower half and the rear ends of the right and left side walls of the slider when the slider is in the forward position.

The height of the dust-proof walls, i.e., the height in the vertical direction (in a direction from the lower half to the upper half) is not less than such a height that the walls close at least the gap between the lower half and the upper half in the inner deep portion of the opening portion and that the walls do not contact the upper half. Further, the length of the dust-proof walls, i.e., the length in the horizontal direction of the dust-proof walls (in a direction from the rear ends of the engagement sliding portions to the rear side wall of the lower half) is selected so that in the rearward position of the slider, i.e., when the side ends of the dust-proof walls are brought into contact with the rear side wall of the lower half, the front opening portion of the lower half is opened for making possible to keep the magnetic tape traveling the front opening portion in the readout or recording operation by the recording and reproducing apparatus. When the slider is in the forward position, the dust-proof walls close the gap formed between the lower half and the upper half in the inner deep portion of the opening portion formed in the lower portion of each side of the casing between the rear side wall of the lower half and the rear ends of the right and left side walls of the slider. At this time, corresponding to the length of the dust-proof walls, when the slider is in the forward position, falling without the range in contact with the outer contour of the maximum winding region of the magnetic tape, side walls can be provided continuous with the rear side wall of the lower half with their end overlapping with the side ends of the above-described dust-proof walls to close the gap formed between the upper half and the lower half in the inner deep portion of the opening portion.

Further, in the magnetic tape cassette according to this aspect, when the side ends of the dust-proof walls are in contact with the rear side wall of the lower half, guide holes corresponding to the drive shaft insertion hole of the rewiding side hub and the drive shaft insertion hole of the feed side hub of the lower half are formed in the bottom surface of the slider.

The magnetic tape cassette according to the second aspect of the present invention will now be described in more detail with reference to one specific example shown in Figs. 13 to 15.

Fig. 13 is a perspective view showing a lower half 12 and a slider 20 fitted slidably to the lower half 12 in a specific example of the cassette according to this aspect. Additionally, the upper half is the same as that shown in Fig. 33 and hence is omitted.

As shown in Fig. 14, the slider 20 has a bottom surface 20a made of a planar plate portion and side wall portions 42, 42 formed in an upright condition at both right and left ends of the bottom surface 20a. Drive shaft insertion holes (guide holes) 20b, 20b corresponding to a drive shaft insertion hole 12b of the rewiding side hub and a drive shaft insertion hole 12a of the feed side hub of the lower half 12 shown in Fig. 13 are formed in the bottom surface 20a. Further, elongated engagement sliding portions 40, 40 are arranged in upper end inner edges of side wall portions 42, 42 of the slider 20, respectively.

Lower surfaces 40a, 40a of the engagement sliding portions 40, 40 engage with and slidingly contact with top surfaces on the right and left side walls of the lower half 12.

In the cassette according to this aspect, dust-proof walls 40b, 40b extending toward the rear side wall 12d of the lower half 12 are provided at the rear ends of the engagement sliding portions 40, 40 of the slider 20.

The slider 20 having these dust-proof walls 40b, 40b is fitted in the lower half 12. Furthermore, in the cassette according to this aspect provided with the upper half, the engagement sliding portions 40, 40 are inserted into sliding grooves formed between the right and left side walls of the lower half and the upper half.

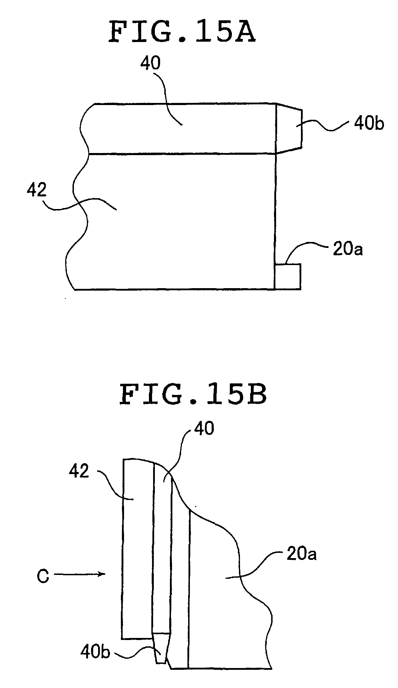

Tapers (slants) that are smaller toward the rear side walls 12d may be formed on four surfaces other than the surfaces confronting the rear side wall 12d of the lower half 12, in the dust-proof walls 40b, 40. The slider is shown in Fig. 15A that is an enlarged side elevation view of the vicinity of the dust-proof wall as viewed from in a direction indicated by the arrow B in Fig. 14, and in Fig. 15b that is a plan view thereof. In this case, Fig. 15A is a side elevation view of the vicinity of the dust-proof wall as viewed in a direction indicated by the arrow C of Fig. 15B.

As shown in Figs. 15A and 15B, the four surfaces other than the surfaces confronting the lower half rear side wall of the dust-proof wall 40b is formed to be gradually smaller in size toward the rear side wall (rightward in Fig. 15A and downwardly in Fig. 15B). At this time, the tapers are formed Further in the dust-proof wall 40b in the same manner.

When the slider is molded using molds, the dust-proof wall is formed using a slide core. In the case where the dust-proof wall is in a rectangular parallelepiped shape obtained by extending the engagement sliding portion without any modification, when the slide core is slid and removed, the wear scar (abrasion) is likely to occur in the dust-proof portion. There is a fear that this leads to the appearance defectives. Further, because the slide core per se is a small bock, it is impossible to provide a cooling circuit in its interior. There may be a case where this causes adverse effects in the molding cycle where the mold cooling time is extended, or the mold-ability may be deteriorated.

However, when the tapers are formed in the dust-proof walls as described above, it is possible to shorten a portion corresponding to a cooling time of the molding cycle and it is possible to obtain a good outer appearance without degradation of mold-ability.

As shown in Fig. 13, in the cassette according to this aspect, when the slider 20 is in the forward position, the opening portions 44, 44 are formed in the lower portions on both sides of the casing between the rear side wall 12d of the lower half 12 and the rear ends 42a and 42a of the side wall portions 42, 42 of the slider 20. In these opening portions 44, 44, the dust-proof walls 40b, 40b overlap with side walls 12e, 12e of the lower half 12 formed in an upright condition continuously with the rear side wall 12d of the lower half 12, thereby closing a gap formed between the lower half 12 and the upper half 10 to prevent the dust or foreign matters from entering from the opening portions 44, 44.

These dust-proof walls 40b, 40b serve to close the gap formed between the lower half 12 and the upper half 10 in the inner deep portions of the opening portions 44, 44. In the conventional case, the side walls 12e, 12e of the lower half 12 are formed so that the tip ends extend to the winding region (the portion indicated by the dotted lines 2 in fig. 13) of the magnetic tape continuously with the rear side wall 12d of the lower half 12 in order to close the gap in the inner deep space of the opening portions 12a and 12b. With the dust-proof walls, the side walls 12e, 12e can be arranged at positions where the side walls are out of contact with the winding region. It is thus possible to keep the maximum region as the winding region.

Further, in the conventional cassette, in order to keep the rewinding region and in order not to come into contact with the winding region, the corresponding portions in the side walls 12e, 12e of the lower half 12 has to be made thin. Upon molding the lower half 12, the portion where the molten resin is hardly caused to flow is formed in the cavity to cause a problem in molding. However, in the cassette according to the present aspect, such a problem is overcome. This is particularly advantageous in molding.

Further, in the case where tapers that are decreased toward the rear side wall 12d of the lower half 12 are formed in the dust-proof walls 40b, 40b as described above, Further in formation of the slider 20, it is possible to obtain a splendid outer appearance without degrading mold-ability.

The magnetic tape cassette in accordance with the second aspect of the present invention is basically constructed as described above.

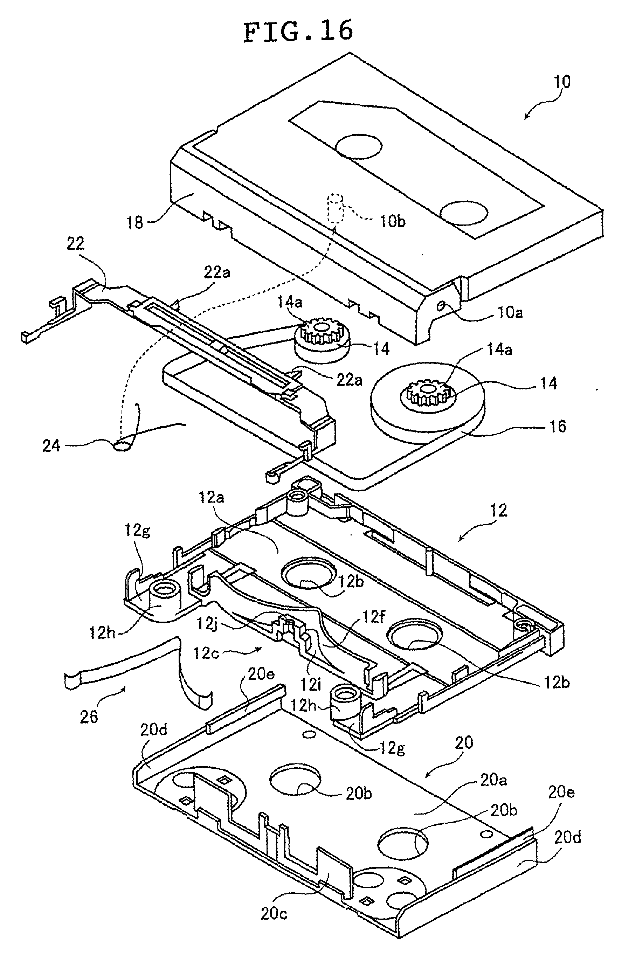

Subsequently, one embodiment of a molding method of a slider of a magnetic tape cassette according to a third aspect of the present invention will now be described in detail with reference to Figs. 16 to 18.

Fig. 16 is a schematic exploded perspective view of a magnetic tape cassette including a slider formed through a molding method in accordance with a third aspect of the present invention.

The magnetic tape cassette is composed mainly of an upper half 10 and a lower half 12, and a magnetic tape 16 wound around take-up hubs 14 is accommodated therebetween. A front lid (lid) 18 for covering and protecting the magnetic tape in no use of the cassette is rotatably mounted about a pivot shaft 10a on a front surface side of the upper half 10. Further, a slider 20 for closing the exposed portion of the case lower side to improve the seal-ability is mounted slidably back and forth on the lower surface on the outer side of the lower half 12.

In no use of the cassette, in order to prevent the magnetic tape 16 wound-up around the take-up hubs 14, from being loosened, a brake member 22 is additionally provide to the upper half 10. The brake member 22 causes brake pieces 22a to engage with gears 14a provided on upper portions of the take-up hubs 14, thereby prohibiting rotation of the take-up hubs 14 and preventing the magnetic tape 16 from loosing. The brake member 22 is biased to a position where the brake pieces 22a engage with the gears 14a in no use of the cassette by a brake spring 24. The brake spring 24 is retained at a projection 10b formed in the upper half 10.

The lower half 12 has reel axle insertion holes 12b, 12b for insertion of the reel shaft into the cassette case in no use of the cassette in a rectangular bottom surface 12a.A V-shaped bent wall-shaped member 12f is provided along the magnetic tape 16 wound around the take-up hubs 14 in the lower half, and a plate spring (slider spring) 26 that is a biasing means for forwardly biasing the slider 20 is fitted in the central portion thereof.

The slider 20 has reel shaft insertion holes 20b, 20b for inserting the reel axle into the cassette case in use of the cassette into a rectangular bottom surface (horizontal surface) 20a. A rib 20c for receiving the biasing force of the plate spring 26 is standingly disposed on the front side of the bottom surface 20a of the slider 20. Further, the slider 20 has side walls 20d, 20d standingly disposed, vertically in the front surface 20a on both right and left ends of the bottom surface 20a thereof to form a U-shape. Engagement sliding portions (dust-proof wall portions) 20e, 20e for engaging the lower half 12 to prevent the slider 20 from falling apart, for enhancing the dust-proof effect and for smoothly moving the slider 20 are provided at partial upper ends of the side walls 20d, 20d.

The slider 20 is slidingly moved back and forth of the cassette in contact with the bottom surface 12a of the lower half from below. When the cassette is loaded in the deck, the slider 20 is positioned automatically rearwardly by action of the device within the deck. However, in no use of the cassette, the slider 20 is positioned in the forward position using the plate spring 26 provided in the lower half 12. When the slider is located in the forward position, the space of the center front portion of the above-described lower half 12 and the reel shaft insertion hole 12b, 12b are covered using the bottom surface 20a of the slider 20 for dust-proof. Further, when the slider 20 is located backwardly, the space of the central front portion of the above-described half 12 is opened and the reel insertion holes 20b, 20b provided in the bottom surface 20a of the slider 20 are identified with the reel shaft insertion holes 12b, 12b of the bottom surface 12a of the above-described lower half 12.

In this aspect, when the slider is to be molded, because the side walls of the slider are tilted inwardly and the bottom portion is prevented from being expanded, although this is not preferable inherently, when the molds are opened, the side walls of the slider are intentionally molded such that the walls are formed riding over the side core. Thus, it is possible to impart the reverse warpage to the normal one of the slider, as a result of which it is possible to obtain the molded article that has a good dimensional precision (warpage).

Further, then, in order to avoid the scar in the slider side walls, the adverse affect onto the outer appearance of the slider is avoided.

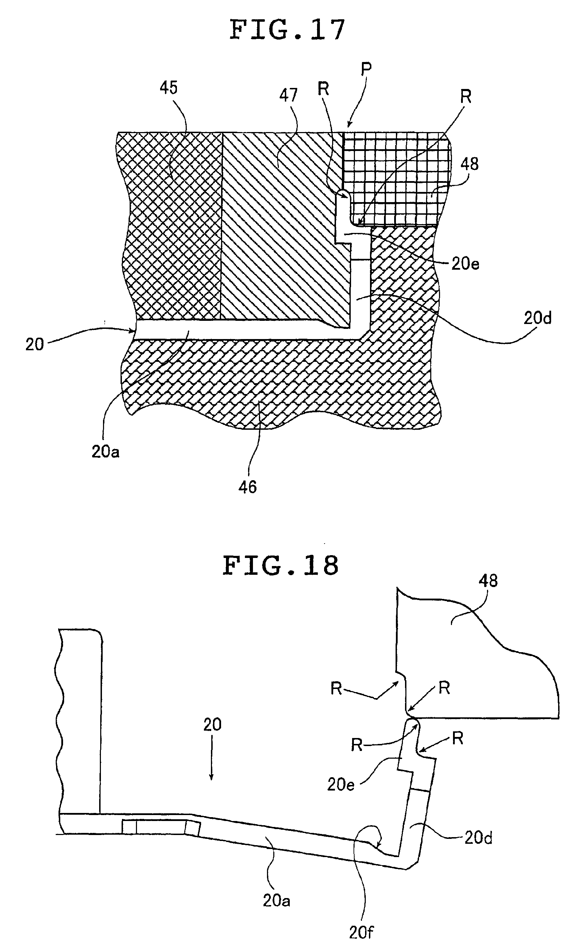

For this reason, in the embodiment, as shown in the cross-sectional view of Fig. 17, when the side wall portion of the slider 20 is molded using a main core (movable side mold 45, a cavity (stationary side mold) 46, a slide core (movable side mold) 47 and a side core movable side mold) 48, a round is given (R-addition) as indicated by reference numeral R at upper and lower ends of longitudinal surfaces formed by the side core 48. Thus, when the molds are opened, the side walls 20d (dust-proof wall portions 20e of the rear ends of the engagement sliding portions) may smoothly and surely ride over the side core 48.

Then, in order not to remain abrasive trace in the lateral direction on the vertical side surfaces of the cores (side core and main core) of the portions corresponding to the both right and left side walls, it is preferable that the polishing state is improved or the removal slant angle is taken so that the mold releasing propensity from the molds (cores) of the slider 20 is improved.

Further, when the molds are opened, in Fig. 17, first of all, the slide core 47 is removed laterally (in the forward direction of the paper surface of the drawing). Therefore, as shown in Fig. 18, when the molds are opened, the side walls 20d are not retained by the slide core 47 and the side walls 20d are only held by the main core 45 in the same manner as in Fig. 6 in the portions where the engagement sliding portions 20e are not present. Accordingly, the force for holding the side walls 20d is decreased or almost eliminated.

Thus, in this embodiment, when the molds are opened, the side wall portions have almost no force for holding to the core side and are held in a floating condition, whereby the side wall portions are more likely to ride over the side core 48. Further, as described above, because the round portions are given to the upper and lower ends of the vertical surface of the side core 48 (R-bevel shape), when the side wall portions ride over the side core 48, the outer appearance of the slider 20 may be kept in a good state without any scar, curl or the like.

Thus, in this embodiment, when the molds are opened, because the side walls 20d of the slider 20 are kept under the condition riding over the side core 48, it is possible to obtain the correction effect to the warpage of the molded article in which the bottom surface is likely to expand and the side walls are likely to tilt inwardly. This is because the core side (main core 45) of the bottom 20a portion of the slider 20 is kept at a temperature of the mold (core), whereas the cavity 46 on the opposite side is kept away from the mold and cooled down under the deformed state.

Additionally, in this case, as shown in Fig. 18, a slit-shaped tilt preventing groove 20f may be provided at the proximal end portion of the side wall 20d thereby improving correction effect.

Further, when a part of the side wall portion is formed by the slide core as stated in the present embodiment, as shown by reference character P in Fig. 17, it is preferable that the side core 48 and the slide core 47 are in abutment (parting) with each other at the center of the side wall rib (engagement sliding portion, dust-proof wall portion 20e). This is because when the side core 48 and the slider 47 are abutment with each other on the inside of the side wall rib or at the outer side end thereof, it is impossible to make round (R) or bevel or chamfer (C) so that the edge of the side wall rib of the slider 20 is damaged. Further, the lower half 12 and the upper half 10 are brought into contact with the assembled brake arm portion to cause a defect such as an assembling fault (misalignment in assembling).

The molding method of a slider of a magnetic tape cassette according to the third aspect of the present invention is basically below-explained.

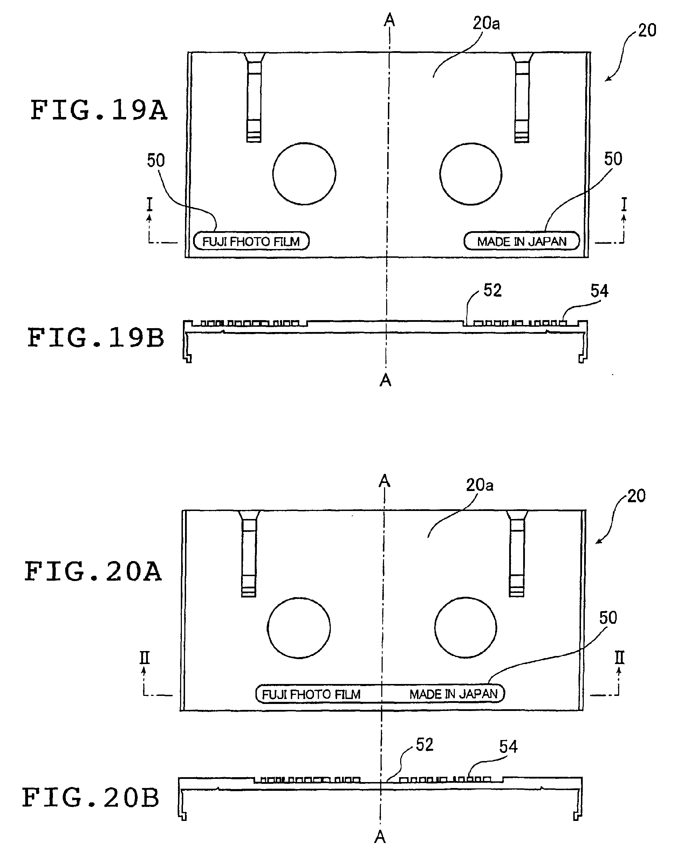

A molding article stamping method in accordance with a first embodiment of a fourth aspect of the present invention and one embodiment of the molded article according to the second aspect will now be described in detail with reference to Figs. 19A to 21B.

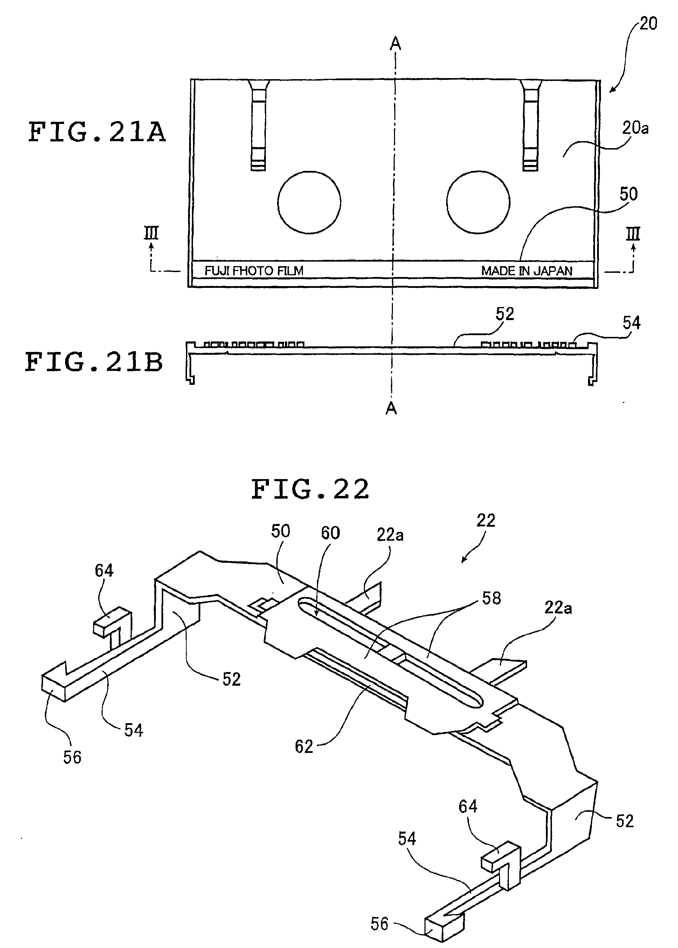

Figs. 19A and 19B are a schematic back surface of a molded article molded with a stamp in accordance with one embodiment of a molded article stamping method in accordance with a fourth aspect of the present invention and a schematic cross-sectional view taken along the line I-I, respectively. Figs. 20A and 20B are a schematic back surface of a molded article molded with a stamp in accordance with another embodiment of a molded article stamping method in accordance with this aspect and a schematic cross-sectional view taken along the line II-II, respectively. Figs. 21A and 21B are a schematic back surface of a molded article molded with a stamp in accordance with one embodiment of a molded article stamping method in accordance with this aspect and a schematic cross-sectional view taken along the line III-III, respectively.

The example shown is one in which the molded article stamping method according to the present invention is applied to a slider 104 that is one of the constituents of one embodiment of the magnetic tape cassette shown in Fig. 33. Accordingly, the structure and effect of the slider shown are same as described above.

As shown in Figs. 19A and 19B, the slider 20 is a substantially U-shaped plastic molded article having at parts a bottom surface 20 formed of a thin plate. Two position display portions 50, 50 are provided on the back surface of the bottom surface 20a. Each display portion 50, 50 is formed of a groove portion 52, 52 that is a recess groove having both ends rounded and a stamp portion 54, 54 molded with letters "MADE IN JAPAN" or "FUJI PHOTO FILM" in a convex manner within the groove portion 52, 52.

In the above-described example, the U-shaped slider is exemplified as the plastic molded article. However, the present invention is not limited thereto. It may be applied to any plastic molded article that has at parts a thin plate portion. It is Further possible to use a flat plate made only of a thin plate portion. It is possible to implant a plurality of plates from a thin plate portion. For example, it is possible to use a variety of molded members having a thin plate portion such as an upper half, a lower half, a front lid or the like for constituting a magnetic tape cassette.

It is possible to exemplify a DDS, a DAT, a video tape cassette or the like as a magnetic tape cassette. Further, the magnetic tape cassette is not limited to a two-reel type magnetic tape cassette but may be a one reel type magnetic tape cassette.

In the present invention, a portion made of a thin plastic plate such as a bottom surface 20a, for example, means the thin plate portion. If the thickness of 50% or more of the plate surface area of the thin plate portion is not greater than 1.5 mm, more particularly 1 mm, the balance of dimensional precision of the present invention is remarkable in comparison with the balance of the dimensional precision of the conventional molded article.

Further, material of the plastic molded article is not particularly limited.

In the foregoing examples, the groove having a flat surface shape rounded at both ends is exemplified as the groove portion 52. However, the present invention is not limited thereto but it is possible to use any shape. For example, it is possible to use a square, a rectangular shape, a circular shape, an oblong shape or the like as a flat surface shape and it is possible to form the groove portion into an elongated groove portion and to round this groove. For example, it is possible to take a semicircular shape or a semi-elliptical shape or to bevel the corners. Further, the groove portion may be continuous to straddle the centerline A-A to be described later and a plurality of the groove portions may be provided at intervals. Further, it is possible to extend the groove in one or more stages. Further, it is possible to further provide the groove portion 52 in the groove portion 52.

The groove portions 52, 52 that are the elongated recess-shaped grooves are provided symmetrically with respect to the centerline A-A in a direction where the grooves 52, 52 are extended, i.e., in the longitudinal direction. Thus, even if the strain occurs in the molded article, because the groove portions 52, 52 are provided symmetrically with respect to the centerline A-A, the balance of the dimensional precision is symmetrical with respect to the centerline A-A. For this reason, as described above, when the slider 20 is moved in the closing position direction and is brought into contact with the wall of the lower half, the contact portion is symmetrical with respect to the centerline A-A, so that there is no rattle in the slider 20.

Accordingly, the position where the groove 52 extends may be any plate if it is symmetrical with respect to the centerline A-A in the longitudinal direction of the bottom surface 20a. For example, as shown in Figs. 19A and 19B, the grooves 52, 52 may be provided symmetrically with respect to the centerline A-A without straddling the centerline A-A. Further, as shown in Figs. 20A and 20B, the groove portion may be provided to intersect with the centerline A-A and symmetrically with respect to the centerline A-A. In this case, from a view of view that the rattle is more effectively prevented, it is preferable that the sum of the lengths of the groove portions 52 extending in the same line in the longitudinal direction is 50 % or more of the full length in the longitudinal direction of the bottom surface 20a in the formation position of the groove portion 52.

As shown in Figs. 21A and 21B, it is possible to form the groove portion 52 to intersect with the centerline A-A and to extend in the full length of the thin plate portion in the longitudinal direction. In this case, the dimensional precision becomes best.

In the present invention, the groove portion 52 extends in parallel with the longitudinal direction. The present invention is not limited thereto. It is sufficient to provide the groove portion 52 symmetrically with respect to the centerline A-A in the longitudinal direction. Therefore it is possible to provide the groove portion 52 to have an angle relative to the longitudinal direction.

Further, in the molded article having a plurality of longitudinal directions, in assembling or using the molded article, depending upon the direction in which the molded members or the molded article and another member, for example, the molded article and the member installed in the recording and reproducing apparatus are brought into contact or into sliding contact with each other, the longitudinal direction is suitably determined. It is possible to provide the groove portion 52 so that the groove portion 52 is symmetrical with respect to the centerline in this direction.

It is preferable that depth of the groove of the groove portion 52 is not greater than 20% of the plate thickness of the portion occupying 50% or more of the plate surface area of the bottom surface 20a and most preferably not greater than 10%.

In the foregoing example, the stamp portion 54 stamped with letters representing a production country and a name of a maker in a convex manner is provided within the groove portion 52. However, the present invention is not limited thereto. It is possible to use letters, figures, drawings, patterns or the like. For example, it is possible to use a CI mark, a production country, a name of a maker, a production name, a model, a size, a logotype mark, a production place, a catch phrase or the like.

The position where the stamp portion is provided may be any place in the groove portion 52. In the case where a plurality of groove portions 52 are provided, it is sufficient to provide the stamp portion 54 within at least one of the groove portions 52. As shown in Figs. 19A to 21B, it is preferable to provide the stamp portion in the symmetrical position with respect to the centerline A-A.

It goes without saying that the letters, figures or the like represented by the stamped portion 54 is not always necessary to be symmetrical with respect to the centerline A-A.

Because it is necessary to overcome the conventional problem to prevent the hook, it is preferable that a height of the molded portion of the stamp portion 54 is substantially equal to or less than a depth of the groove of the groove portion 52.

The molded article with the stamp portion has been described. A molded article stamping method in accordance with the first aspect of the present invention will now be described.

The stamping method of the molded article according to the present invention is to display the stamp on the surface of the molded article by molding the above-described molding material using plastic molds provided with concave and convex patterns on the stamp surface in advance, so that the above-described groove portion and stamp portion can be provided onto the surface of the thin plate portion of the plastic molded article.

Here, in order to further improve the dimensional precision, it is preferable to provide a cooling unit so as to be symmetrical with respect to the centerline in the longitudinal direction of the thin plate portion.

Here, the sculptured surface is not directly provided in a mother mold but may be provided in another member and fitted in the mother mold in a so-called insert core molding manner. Further in this case in the same manner, an insert core is formed so that a groove portion may be provided symmetrically with respect to the centerline in the longitudinal direction of the thin plate portion so as to obtain a molded article having the above-described shape.

Further, it is preferable to provide the cooling means in the insert core. In the case where the cooling unit is not provided in the insert core, it is preferable to provide the cooling means symmetrically with respect to the longitudinal direction of the thin plate portion in order to further improve dimensional precision.

The method of molding according to the present invention is not particularly limited. It is possible to exemplify a general molding method using molds in which the above-described display portion may be provided on the surface of the plastic molded article such as a compression molding, a transfer molding, an injection molding, a blow molding and the like.

The mold provided with the above-described sculptured surface is used, or the mold into which the insert core is fitted and provided with the sculptured surface is used and the molding material is molded through the general molding method whereby it is possible to mold the molded article with a good balance of the dimensional precision without any rattle or resin wear in assembling or using the molded article with a desired integral display section.

The molding stamping method and the molded article according to the fourth aspect of the present invention is been thus constructed.

An embodiment of a magnetic tape cassette according to a fifth aspect of the present invention will now be described in detail with reference to Fig. 16 and Figs. 22 to 27.

The magnetic tape cassette according to one embodiment of this aspect is shown in Fig. 16.

The magnetic tape cassette according to this aspect is, as described above, composed mainly of an upper half 10 and a lower half 12. A magnetic tape 16 wound between a take-up hub 14 on the feed side and a take-up hub 14 on the winding-up side is accommodated therebetween. A front lid 18 for covering and protecting the magnetic tape 16 in no use of the cassette is mounted to be rotatable about a pivot axle 10a on the front side of the upper half 10. Further, the slider 20 is mounted slidably back and forth in order to close the open portion on the lower side of the case to improve seal-ability in the lower surface of the outside of the lower half 12.

In no use of cassette, in order to prevent the magnetic tap 16 wound around the take-up hubs 14, 14 from being loosened, a brake member 22 is additionally provided on the upper half 10. The brake member 22 has two brake pieces 22a, 22a, causing the brake piece 22a to engage with a gear 14a provided on a top portion of the take-up hub 14 on the feed side and at the same time, causing the brake piece 22a to engage with a gear 14a provided on a top portion of the take-up hub 14 on the winding-up side thereby preventing rotation of the take-up hubs 14, 14 and generation of loosening of the magnetic tape 16. The brake member 22 is biased to the position where the brake pieces 22a, 22a are engaged with the gears 14a, 14a, respectively, in no use of cassette. The brake spring 24 is retained at the projection 10b provided on the upper half 10.

The lower half 12 has reel shaft insertion holes 12b, 12b for inserting the reel shafts into the cassette in use of cassette on the rectangular bottom surface 12a and has projecting portions 12g, 12g extending forwardly of both right and left ends of the bottom surface 12a. Cylindrical ribs 12h, 12h for guiding the magnetic tape 16 are provided on both right and left projecting portions 12g, 12g. The space between these right and left projecting portions 12g and 12g is directed to a space into which a so-called tape loading device provided on the deck side into which the magnetic tape cassette is to be inserted is to be introduced.

The slider 20 is contacted from below with the bottom surface 12a of the lower half 12 to be slidable back and forth. When the slider is located forwardly, the space between the right and left projecting portions 12g, 12g of the above-described lower half 12 and the reel shaft insertion holes 12b are closed using the bottom surface 20a of the slider 20 for dust-proof. Further, when the slider 20 is position backwardly, the space between the above-described right and left projecting portions 12g and 12g is opened two holes 20b, 20b provided in the bottom surface 20a of the slider 20 are coincided to the reel shaft insertion holes 12b, 12b.

When the cassette is loaded in the deck, the slider 20 is positioned automatically backwardly by action of the device within the deck. However, in no use of the cassette, the slider is positioned forwardly by the biasing means (plate spring 26) provided on the lower half 12.

A wall-shaped member 12f in which two split sleeve-shaped ribs are continuously provided in a V-shape is implanted vertically on the side, facing the space between the above-described right and left projecting portions 12g and 12g (side where the magnetic tape is exposed), of the bottom surface 12a of the lower half 12. The V-shaped bent portion of this wall-shaped member 12f has a shape along which the magnetic tape 16 follows when the magnetic tape 16 is wound between the take-up hubs 14, 14. A post-shaped rib 12j is formed in an upright state almost in a central portion of the portion 12i of the bottom surface partitioned into a triangular shape manner by the wall-shaped member 12f.

The plate spring 26 for biasing the slider 20 forwardly is fitted between this post-shaped rib 12j and the above-described wall-shaped member 12f. Further, the slider 20 is biased to be fixed to the forward position by the plate spring 26 when the cassette is not used. A vertical wall-shaped rib 20c is provided in the front portion of the bottom surface 20a for receiving the biasing force of this plate spring 26.

The brake member 22 is enlarged and shown in Fig. 22. The brake member 22 has the brake pieces 22a, 22a engaging with the gears 14a, 14a of the take-up hubs 14, 14 on the elongated strip-shaped horizontal plate portion 50. The elongate thin brake arms 54 extend in the horizontal direction and in the vertical direction to the longitudinal direction of the horizontal plate portion 50 from leg portions 52 that are provided vertically integrally with both ends of the longitudinal direction of the horizontal plate portion 50. A hook portion 56 engaging with the projections provided on the inside of the side walls of the front lid 18 in accordance with rotation of the front lid 18 are provided at the tip ends of the brake arms 54.

Further, a convex portion 58 is formed integrally in the longitudinal direction in the horizontal plate portion 50. The top surface thereof forms a sliding surface sliding with the inner bottom surface of the upper half 10. A groove 60 is formed in the longitudinal direction in the central portion of the convex portion 58. Further, a groove 62 provided on the front side surface of the horizontal plate portion 50 forms a spring hook portion for receiving an end of the brake spring 24.

Additionally, when the brake pieces 22a, 22a engage with the gears 14a, 14a, L-shaped projections 64 formed in the midway of the brake arms 54 serve as a stopper for preventing the release of the engagement due to the shock or the like.

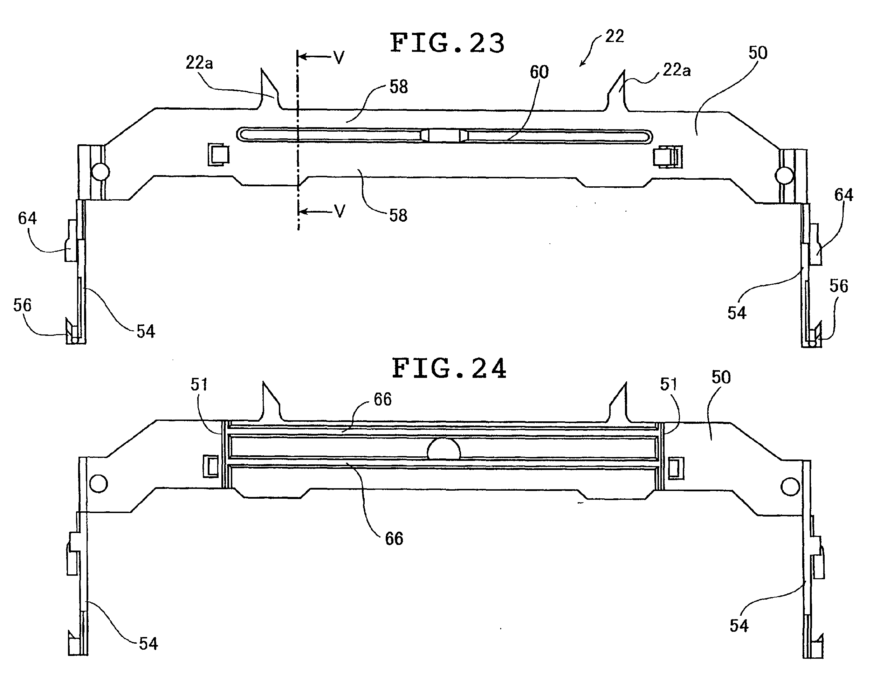

Fig. 23 is a plan view of the bake member 22 shown in Fig. 22 as viewed from above and Fig. 24 is a bottom view of the brake member thereof as viewed from below.

As shown in Fig. 24, thickness reducing portions 66, 66 are provided in the longitudinal direction on the surface opposite to the sliding surface of the convex portions 58, 58 of the horizontal plate portion 50 forming the sliding surface with the upper half 10, respectively. As shown in Fig. 24, the thickness reducing portions 66, 66 are formed over the substantially full length in the longitudinal direction where the convex portions 58, 58 are provided.

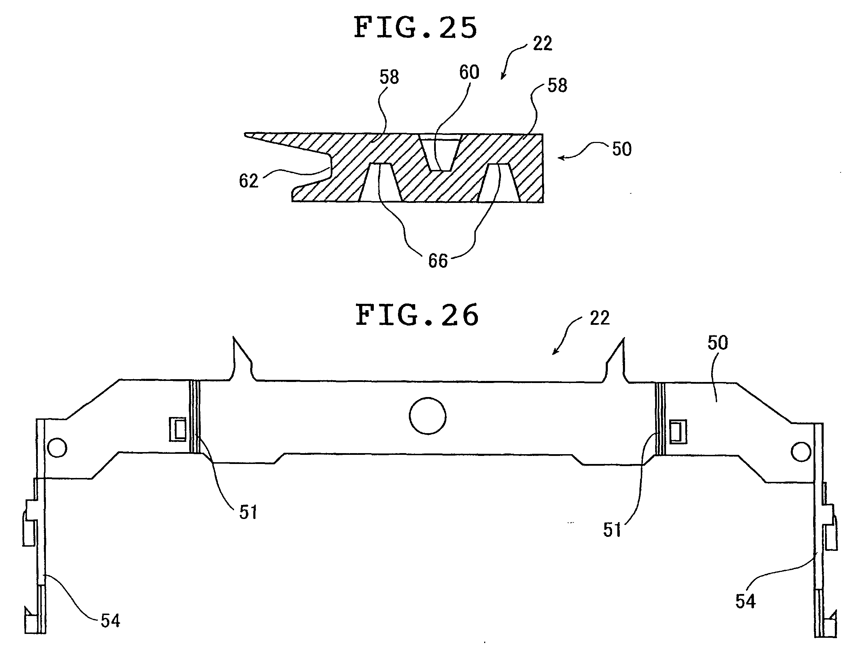

For more easily understanding this, Fig. 25 shows a cross-section taken along the line V-V of Fig. 23. As shown in fig. 25, the thickness reducing portions 66, 66, the convex portions 58, 58, and the groove 60 are alternatively provided.

As apparent from Fig. 25, because the thickness reducing portions 66 are provided, it becomes possible to make substantially uniform the thickness of the brake member 22. Further, because the horizontal plate portion 50 is thus formed, it is possible to improve the rigidity thereof.

Further, the convex portions and the thickness reducing portions are provided in the longitudinal direction of the horizontal portion 50 to obtained the above-described shape and make uniform the thickness of the brake member 22. This makes it possible to suppress the deformation due to the molding shrinkage difference because the thickness is uniform even if the brake arms 54 and the lower half 12 are slid along and on each other. And the cross-section is formed as shown in Fig. 25, it is possible to improve the rigidity between the brake arms 54, 54. In this case, the same effect is ensured.

By the way, as shown in Fig. 26, slits (recess portions) 51 in the back-and-forth direction may be provided in the horizontal plate portion 50 of the brake member 22 so as to prevent the tilt of the brake arms due to the deformation in molding. When such a brake member 22 is molded using molds, the brake arms 54, 54 on both sides of the horizontal plate portion 50 are formed on the movable side mold (core side). When the molds are opened for removal of the molded article, the molded article (brake member) is held on the core side. In this case, the cooling time is a minimum period of time during which the skin layer of the molding resin is formed. The molds are stopped for several seconds after the molds have been opened, thereby performing the mold opening cooling for cooling the resin. Then, the slits 51, 51 of the above-described brake member 22 are warped toward the fixed mold (cavity side). The central portion of the brake member 22 is in the form of a convex and somewhat lifted from the core side. When the molded article is removed thereafter, the opposite side is Further cooled down to become flat.

This is because when the molds are opened, and when the brake member 22 is rapidly cooled down from the core side and shrunk rapidly, the slits 51, 51 of the brake member 22 serve as hinges so that the cavity side of the brake member 22 is deformed toward in the opposite direction to a direction in which the cavity side is intrinsically likely to be deformed from the product shape. Thereafter, the brake member 22 is removed from the interior of the molds. The opposite surface of the brake member 22 is cooled down and shrunk to obtain a flat condition.

Further, as shown in Fig. 24, Further in the case where the thickness reducing portions 66, 66 are provided in the brake member 22 having the slits 51, 51, it is possible to obtain the brake member without any warpage by effecting the above-described mold opening cooling.

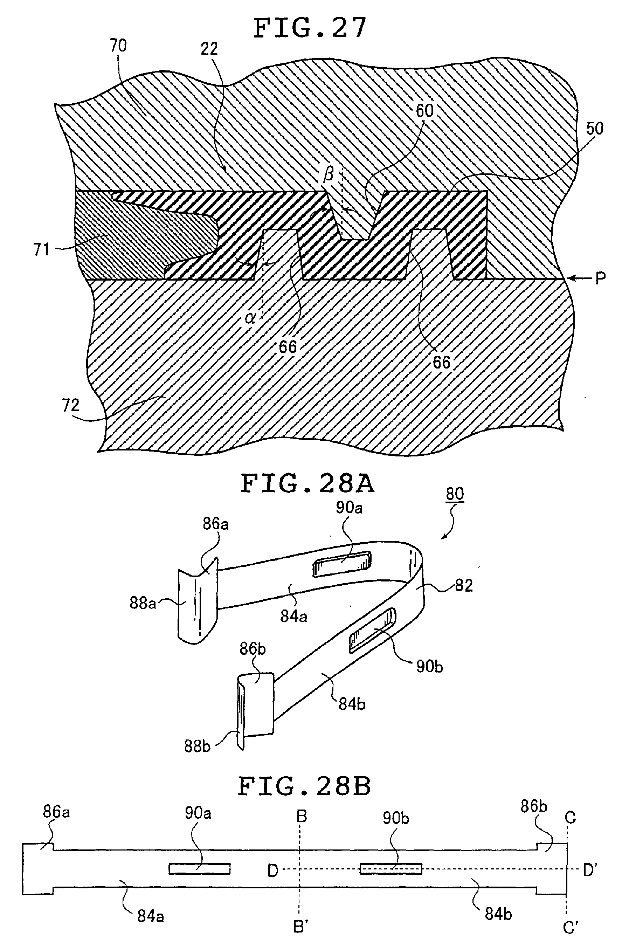

In general, when the molds are opened, the molded article has to be held on the core side. The brake member 22 shown in Fig. 25 is formed in the molds as shown in Fig. 27. In Fig. 27, reference numeral 70 denotes the core side of the mold and reference numeral 71 denotes a slide core, and reference numeral 72 denotes the cavity side of the mold. Further, reference character P represents a parting line along which the molds are separated from each other.

In the case where the molds are to be surely cooled, when the molds are opened the molded article has to be easily removed from the cavity side and to be surely held on the core side. Then, in general, the gradient (angle α formed by the slant surface and the direction in which the molds are opened) of the slant surface of the thickness. reducing portions 66 and 66 provided in the horizontal plate portion 50 of the brake member 22 is equal to or greater than the gradient (angle β formed by the slant surface and the direction in which the molds are opened) of the slant surface of the groove 60.

However, because the molds are stopped for several seconds in the above-described mold opening cooling after the molds have been opened, it takes time to bring about the extension of the molding cycle. Therefore, as shown in Fig. 27, the gradient α of the thickness reducing portions 66, 66 is set to be smaller than the gradient β of the groove 60, thereby increasing the mold separation resistance from the cavity side 72 of the brake member 22 so that the brake member 22 is drawn toward the cavity side 72 when the molds are opened, and the brake member 22 is somewhat lifted from the core side, thereby obtaining the same effect as in the mold opening cooling.

Because the same effect as in the mold opening cooling is achieved, if, thus, there is the difference between the gradient α of the thickness reducing portions 66, 66 and the gradient β of the groove 60, it is preferable that the gradient α of the thickness reducing portions 66, 66 (cavity side) is equal to 50% or less of the gradient β of the groove 60 (core side).

Further, the brake member 22 provided with the thickness reducing portions 66, 66 may have the slits 51, 51 in the back-and-forth direction as shown in Fig. 24 but may not have any slit. However, the case where the slits 51, 51 are provided is better in effect in view of the prevention of warpage or mold-ability.

Thus, according to this embodiment, it is possible to suppress the deformation due to molding shrinkage difference of the brake member and to improve the rigidity between the brake arms. As a result it is possible to ensure the smooth sliding movement of the brake member.

The magnetic tape cassette according to the fifth aspect of the present invention has been thus constructed basically.

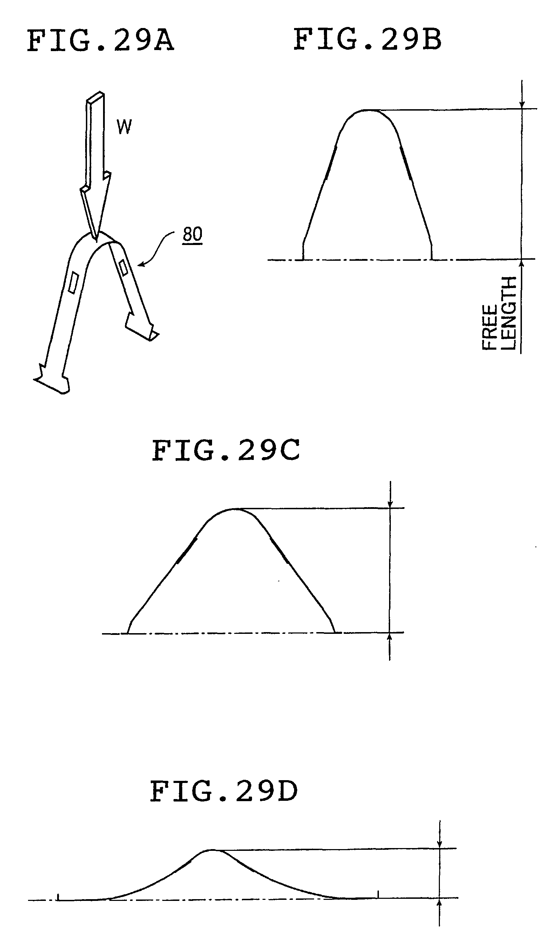

One embodiment of a plate spring according to a sixth aspect of the present invention will now be described in detail with reference to Figs. 28A to 31.

The plate spring according to this aspect has a substantially U-shaped form having a central bent portion, arm portions extending substantially in the form of V on both right and left sides of the central bent portion thereof and leg portions bent outwardly at both tip ends of the arm portions. This plate spring may be provided in any position where the biasing force is needed and where the central bent portion is fixed, the leg portions are brought into contact with the article to be biased and the biasing force is given to the member to be biased and may be used as a part for obtaining the predetermined biasing force. In particular, this is effectively used as a part to be used in the position where the biasing force has to occur in a predetermined range. For example, in the magnetic tape cassette, the plate spring may be used as a slider spring to be mounted on the front edge of the central portion of the lower half for biasing the slider forwardly.

Furthermore, in the plate spring according to the present invention, the leg portions have a function to come into sliding contact with the contact portion provided in the member to be biased. It is preferable that the portion to be slidingly contacted has no burr or the like so as not to slidingly contact with the contact portion of the member to be biased to impart the damage because the wear of the contact portion due to the sliding contact is small and furthermore the wear tips or the like are not produced.

The plate spring according to the present invention has a drawn portion in at least one part of the plate surface of the arm portions and the central bent portion. The drawn portion may be formed through a well known machining method.

The drawn portion may be provided either one of the arm portions or may be formed only on the central bent portion. Further, the drawn portion may be provided on both of the arm portions and the central bent portion.

It is preferable that the drawn portion extends in the longitudinal direction of the plate spring in view of the improvement of the spring force of the plate spring. The longer the length of the drawn portion in the longitudinal direction, the higher the rigidity of the plate spring will become. Further, in view of facilitating the bending machining work for machining the member into a plate spring having a desired bending angle, it is preferable to provide the drawn portion in the vicinity of the central bent portion avoiding the vicinity of the centerline of the central bent portion. This is properly determined depending upon the curvature of the central bent portion. Furhter, in view of the necessity that the various operations of the parts to be biased by the biasing force of the plate spring be suitable, it is preferable to provide the drawn portion symmetrically with respect to the centerline of the central bent portion in the plate surface of the arm portion in the vicinity of the central bent portion.

According to the present invention, from an economical point of view and in view of the point that a cross-section secondary moment of the plate spring is increased, it is preferable that a length (width) of a short side of the drawn portion is not less than 10%, more preferably, in the range of 25 to 35% of the length of the plate width of the plate spring.

According to the present invention, it is possible to provide the convex portion of the draw portion on either outside or inside of the plate spring. For example, as in the magnetic tape cassette shown in Fig. 51, in the case where the wall 218 for determining the maximum spring opening angle of the slider spring 186 is provided in the front edge of the lower half 182, it is preferable to provide the convex portion to come inside of the plate spring so as not to bring the convex portion of the drawn portion into contact with the wall 218.

Here, from an economical point of view and in view of the point that a cross-section secondary moment of the plate spring is increased, it is preferable that a depth of the drawn portion is preferably not less than 10% of the thickness of the plate spring and more preferably not less than 30% thereof.

According to the present invention, the shape of the drawn portion provided in the plate surface of the plate spring is not limited to the groove having a predetermined depth and a rectangular shape in plan view as shown in the drawing but may be formed into any shape. For example, the flat shape thereof may be a square, a rectangular shape, a circular shape or an oblong shape. The drawn portion may be formed into an elongated groove shape and both ends of this groove may be rounded. For example, the drawn portion may have a semicircular shape or a semi-elliptical shape. The four corners may be rounded or may be formed in semi-multi-angular shape. Further, the drawn portion may be continuous or may be provided in a plurality of segments at an interval. Furthermore, it is possible to provide a single kind of a drawn portion or a plurality of and a variety of kinds of drawn portions on the plate surface of the plate spring.

Further, in the plate spring according to the present invention, the shape of the central bent portion, the length of the arm portions, and the angle (bending angle) of the right and left arm portions, the material, the thickness or the width of the plate, the shape of the drawn portion provided in the plate surface and the like are suitably determined in response to the necessary biasing force, the shape of the arrangement place, the installation space, the form of the assembling jig and the like. The central bent portion is not limited to the specific one but may take any desired shape if the shape extends the arm portions into a substantially V-shape on both right and left sides. For example, it is possible to use a circular shape in cross-section, a U-shaped in cross-section and a V-shape in cross-section.

The material of the plate spring is selected in view of the use, the circumstances of a place where the article is used, a required biasing force, the stroke (shift amount) and the like. Because the spring force of the plate spring may be to some extent, adjusted by the drawn portion provided in the plate surface, the material of the plate spring according to the present invention may be selected from a wide range. In particular, in a case where the plate spring is used as a slider spring of a magnetic tape cassette, in order to obtain the stable operation for the forward sliding movement and the backward sliding movement of the slider of the magnetic tape cassette, it is necessary to provide a large strain deformation in response to the forward sliding movement and the backward sliding movement of the slider, and to exhibit a predetermined stable biasing force in a large stroke range where the slider is slidingly moved. Therefore, according to the present invention, by providing the suitable drawn portion in the plate surface of the plate spring, it is possible to give the dynamic characteristics in the wider range even with SUS631, SUS301 or the like of a precipitation curing system having a high rigidity that has been used conventionally.

Further, the thickness and the hardness of the plate spring according to the present invention may be suitably selected in accordance with the space of the arrangement place, the stroke (shift amount), the biasing force and the like. In particular, in the case where the plate spring according to the present invention is used as the slider spring of the magnetic tape cassette, the characteristics are largely changed even due to the fine thickness difference. Accordingly, it is preferable that the range of the thickness to be used where the various characteristics that are needed may be met sufficiently is 0.05 to 0.2 mm, more preferably 0.09 to 0.11mm. It is preferable that the hardness of the plate spring is not less than 450 mHV, more preferably, 540 mHV in terms of Vickers hardness.

The slider spring of the magnetic tape cassette exemplified as a specific example of the plate spring according to the present invention will now be described in detail.

Fig. 28A is a perspective view of one specific example in which a plate spring according to a sixth aspect of the present invention is applied to a substantially U-shaped slider spring used in the magnetic cassette tape.

A slider spring 80 shown in Fig. 28A is a plate spring having a constant plate width as in the slider spring 186, which has, in the plan view shown in Fig. 28A, a central bent portion 82 having a circular shape, arm portions 84a and 84b extending in a substantially V-shape on both right and left sides of the central bent portion 82 and leg portions 86a and 86b disposed on both tip ends of the arm portions 84a and 84b. The leg portions 86a and 86b have outwardly bent sliding portions 88a and 88b in contact with a contact wall 210 formed in an upright state in the front end portion of the slider 184 shown in Fig. 51. Further, drawn portions 90a and 90b extending in the longitudinal direction of the plate spring with which to make the inner sides of the plate spring 80 as the convex portions thereof are provided in the arm portions 84a and 84b.

The shape of the slider spring 80 before bending machining will now be described in detail.

Fig. 28B is a developed view of the slider spring 80 before bending machining. The drawn portions 90a and 90b are provided symmetrically with respect to a centerline B-B' of the central bent portion 82 of the plate spring. The shape of the drawn portion will now be described in detail. However, because the drawnings are provided symmetrically with respect to the centerline B-B', explanation will be given only to the right side of the drawing from the centerline B-B'.

The drawn portion 90b is provided on the arm portion 84b in a rectangular groove-like shape in plan view so as to project forwardly in the paper surface in a convex manner. In the case where the position of the centerline B-B' is defined as zero and a tip end C-C' of the leg portion 86b is represented by 100, the length of the drawn portion 90b in the longitudinal direction extends from about 20 to 50. Further, the length in a short side of the drawn portion 90b (width) occupies approximately 30% of the width of the plate spring. The drawn portion 90b includes a centerline D-D' of the plate spring in the longitudinal direction and is provided symmetrically with respect to the centerline D-D'. Further, a depth of the drawn portion 90b is approximately 50% of the thickness of the plate. The drawn portion 90b is provided to convex in the forward direction of the paper surface.

The plate spring shown in Fig. 28B is bent and machined so that the arm portions 84a and 84b come in the forward direction of the paper surface about the center of the centerline B-B'. The leg portions 86a and 86b are bent so as to be directed inside of the plate spring 80 and the tip ends of the leg portions 86a and 86b are directed to outside of the plate spring 80 to form the sliding portions 88a and 88b, thereby obtaining a shape of the plate spring 80 of Fig. 28A.

Such a slider spring 80 is assembled with the slider spring retainer portion 216 shown in Fig. 51. When the magnetic tape is used, the sliding portions 88a and 88b are slidingly moved outwardly along the contact wall 210 in accordance with the rearward sliding movement of the slider 184, respectively. The spring is opened so that the angle defined by both arm portions 84a and 84b becomes greater. When the slider 54 is moved slidingly forwardly, the slider 184 is biased forwardly toward the inside end of the front lid 190.

In order to explain the effect of the plate spring according to the present invention, the plate spring 80 of Fig. 28A according to one embodiment of the present invention and the exactly same plate spring (plate spring for comparison) as the plate spring 80 of Fig. 28A except to the point that the drawn portions 90a and 90b are not provided in the plate surface were manufactured. The spring forces of these springs were measured. Additionally, the plate spring having a thickness of approximately 0.1 mm was used. The drawn length of the drawn portion of the former case was approximately 30% of half a length of the plate spring and the drawn depth was approximately 0.05 mm. The measurement of this spring force is performed by measuring the spring force using a push-pull gage or a strain gage or the like in response to the opening angle of the spring while a load is applied as indicated in the arrow W to the comparison plate spring and the plate spring 80 as shown in Fig. 29A (an example using the plate spring 80). Fig. 29B is a view showing a condition in which any load is not applied at all. The angle at this time is approximately 30 degrees. Fig. 29C shows a case where a first loading point works in the case where the spring opening angle is approximately 60 degrees. Fig. 29D shows a case where a second loading point works in the case where the spring opening angle is approximately 160 degrees.

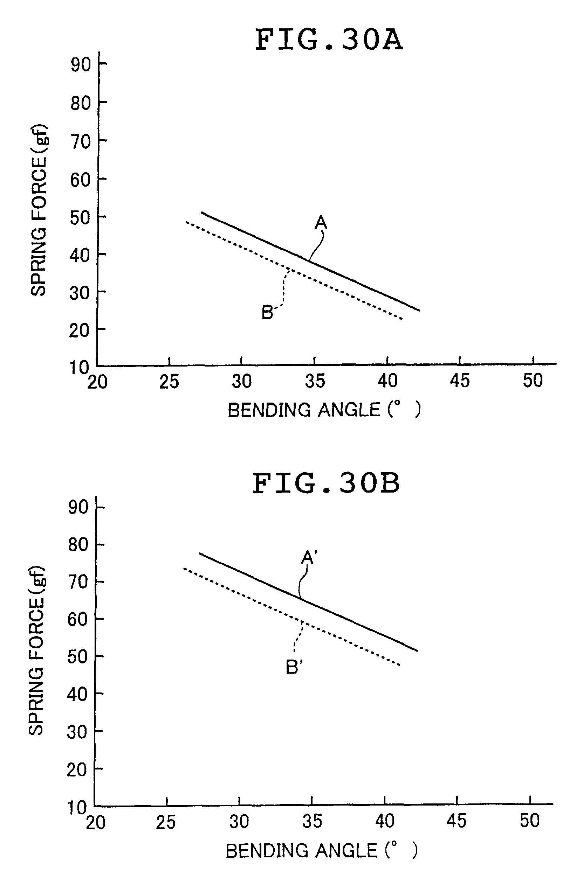

Figs. 30A and 30B show the relationship between the bending angle of the plate spring and the spring force by using a straight line assuming that the bending angle is taken in abscissa and the spring force measured is taken in ordinate. The solid line shows the measurement result of the plate spring 80 in accordance with the embodiment of the present invention, whereas the dotted line shows the measurement result of the plate spring for comparison. Further, Fig. 30A shows the measurement result at the first loading point and Fig. 30B shows the measurement result at the second loading point. From these graphs, because the plate spring according to the present invention is provided on the leaf surface with the drawn portion, it is understood that the spring force is improved in any point of the first loading point and the second loading point.

Fig. 31 shows a case where the plate spring according to the present invention is applied to the substantially U-shaped slider spring to be used in the magnetic tape cassette sand two plate springs are overlapped with each other in order to explain that this plate spring prevents the embracement and facilitates detection of overlapping.

The plate spring in Fig. 31 has, in the same manner as in the slider spring 80 of Figs. 28A and 28B, a substantially U-shaped form having a central bent portion 82, arm portions 82a and 82b extending substantially in the form of V on both right and left sides of the central bent portion 82 thereof and leg portions 86a and 86b bent outwardly at both tip ends of the arm portions 84a and 84b. The leg portions 86a and 86b have sliding contact portions 88a and 88b bent outwardly in contact with the contact wall 210 implanted at the front end portion of the slider 184 shown in Fig. 51. The rectangular drawn portions 90a and 90b in plan view are provided to be convex inside of the spring are provided in the arm portions 84a and 84b.

In order to effectively prevent the embracement, in the slider spring in Fig. 31, both tip ends of the arm portions 84a and 84b extending in the substantially V-shape are bent inwardly in a range in which the ends are not directed inside (bending start ends) and connected to the straight leg portions 86a and 86b. The ends thereof are smoothly connected to the sliding portions 88a and 88b forming an arcuate shape.

Here, the "inside" is meant by a direction closer to the centerline L-L' of a substantially U-shape shown in Fig. 31 from the central bent portion 82 to the sliding portions 88a and 88b. Further, the "outside" means a direction away from the centerline L-L' of the substantially U-shape shown in Fig. 31 away from the curvature start ends to the sliding portions 88a and 88b.

In the slider spring of Fig. 31, both leg portions 86a and 86b are bent inwardly at the curvature start ends to the arm portions 84a and 84b. The bending direction is such that the leg portions 86a and 86b and the sliding portions 88a and 88b are on the planes (represented by line m-m' and line n-n' in the plan view of Fig. 31) passing through the curvature start ends in parallel with a plane vertical to the plane including the substantially U-shaped spring on the geometrically centerline of the substantially U-shaped plate spring, i.e., the center plane (represented by centerline L-L' in the plan view of Fig. 31) of the substantially U-shaped plate spring or outside these planes.

Thus, the reason why the leg portion 86a and 86b of the slider spring are formed on the planes (represented by line m-m' and line n-n' in the plan view of Fig. 31) passing through the curvature start ends or outside of these planes is to prevent the embracement or overlap of the slider springs and to make it possible to separate the slider springs one by one with ease by a separator even if embracement-state and overlapping state occur.

Namely, as shown in Fig. 31, in the case where the embracement occurs in the slider springs according to the present invention, the slider springs are brought into contact with each other at the portions of the leg portions 86a and 86b. Because the contact portions are the leg portions 86a and 86b opened outwardly, it is possible to easily separate the two slider springs that are embraced by each other.

Further, because the leg portions 86 and 86b are formed so that the directions in which the leg portions 86a and 86b of the two slider springs which are brought into contact with each other extend are not inwardly directed, even if these slider springs are overlapped with each other at the portions of the leg portions 86a and 86b, there is no fear that a height from the central bent portion 82 to the contact portions of the leg portions 86a and 86b is not mutually restricted by the slider springs. Therefore, the slider springs are not biased each other with a strong force. As a result, it is possible to easily separate the slider spring from the other in the forward direction or the rearward direction of the paper surface (back-and-forth direction) shown in Fig. 31.

Further, in the slider springs shown in Fig. 31, a loosing state occurs between the arm portions of the two slider springs corresponding to the depth of the grooves of the drawn portions 90a and 90b by the drawn portion 90a and 90b provided in the arm portions 84a and 84b (at the portions indicated by F and G in Fig. 31) whereby a space is formed between the central bent portions of the spring sliders (at the portion indicated by E in Fig. 31). Thus, in the slider springs shown in Fig. 31, there is no fear that the plurality of plate springs would be overlapped to embrace each other in delivery, storage, automatic assembling or the like. It is difficult to overlap the springs. Even if the springs are overlapped with each other, it is easy to peel and separate each slider spring and furthermore, even if the springs are overlapped partially, it is easy to detect the overlapping state.

### INDUSTRIAL APPLICABILITY

As described above in detail, according to the first aspect of the present invention, grooves (recess-shaped portions) for forming a counter flow for canceling the turbulence of resin in molding by the recess-shaped grooves in the back surface are provided in the vicinity of the convex region having such a height that they are in sliding contact with the bottom surface of the casing whereby the fluidization of resin is smooth and the generation of the warpage or the like in molding the slider may be suppressed and it is possible to obtain the slider with good quality and good dimensional precision. The shape of the above-described recess-shaped grooves may be selected from a wide range.

Further, the convex region having the height for sliding contact with the bottom surface of the casing is provided in a range such that does not exceeds the centerline in the vertical direction to the sliding direction whereby fluidization of resin in the recess-shaped grooves having the portions therearound is smooth and the generation of the warpage or the like in molding the slider may be suppressed and it is possible to obtain the slider with good quality and good dimensional precision. Further, the opening and closing operation may be performed reliably in assembling with the casing. There is no functional defect such as abnormal sliding contact of the slider with the casing.

Further, in the magnetic tape cassette according to the second aspect of the present invention, when the slider is positioned in the forward position, it is possible to prevent dust, foreign matters or the like from entering from the opening portion formed in the lower portion on both sides of the casing between the rear side wall of the lower half and the rear ends of the right and left side walls of the slider and it is Further possible to sufficiently keep a winding region of the magnetic tape. It is therefore possible to make the magnetic tape amount that may be accommodated at the maximum diameter allowable in the structure of the casing.

Further, in the magnetic tape cassette according to this aspect, it is possible to overcome the problems in molding in which the flow of the molten resin in the cavity corresponding to the closing wall becomes difficult due to thinning of the thickness of the closing wall when the conventional magnetic tape cassette is molded with a structure standingly disposed against the closing wall for preventing the introduction of dust from the lower half. The flow of molten resin within the molds of the slide cores is smooth and the problems in molding may be overcome, resulting in obtaining availability.

Further, according to the third aspect of the present invention, it is possible to mold the slider with a high dimensional precision without degrading outer appearance and moldability of the article without any warpage. It is possible to provide the slider that has a good sliding property in opening and closing the cassette.

Further, according to the fourth aspect of the present invention, it is possible to integrally form the desired stamped portion without degrading the dimensional precision on the surface of the plastic molded article having the thin plate portion. This is most suitable for the article, i.e., the member constituting, for example, a magnetic tape cassette, which requires the high dimensional precision without occurrence of rattle or resin wear when the article is assembled or used.

Further, according to the fifth aspect of the present invention, the convex portion that becomes the sliding surface with the upper half is continuously formed on the horizontal plate portion of the brake member and the thickness reducing portions are formed on the opposite surface to the sliding surface of the convex portion, thereby suppressing deformation due to the molding shrinkage difference of the brake member, to improve the rigidity between the brake arms and to make it possible to perform smooth sliding movement of the brake arm.

Further, with the plate spring according to the sixth aspect of the present invention, it is possible to improve rigidity of the plate spring, to increase a degree of freedom of selection of material for the plate spring material and therefore improve the degree of freedom in designing the plate spring. In particular, the degree of freedom in designing the spring force is improved when the spring angle is changed over a wide range. As a result, it is possible to reduce the cost and to facilitate the molding work to reduce the number of maintenance of the molding machine, thereby improving the productivity.

Further, in the plate spring according to this aspect, no generation of embracement does not occur, due to the overlapping of the plurality of plate springs in delivery, storage or automatic assembling of the plate springs. Even if parts of the springs are overlapped with each other, it is possible to easily detect the overlap and it is possible to readily align the overlapped ones by using the parts feeder.

The magnetic tape cassette, the parts thereof, the molding method of the parts, the stamping method of the molded article and the molded article according to the present invention have been described in detail. However, the present invention is not limited to these examples. Various modification or changes are possible without departing from the spirit of the present invention.

## Claims

1. A magnetic tape cassette comprising:
an opening portion into which a tape loading device can be inserted, being provided in a bottom surface of a casing;
a slidable slider for opening and closing said opening portion, being provided to face in both outer sides of said bottom surface so as to face said bottom surface;
an elastic lock piece having an engagement head portion that can be swung up and down being formed in at least one position on the bottom surface of said casing;
a through-hole with which the engagement head portion of said elastic lock piece engages so that the slider is locked under an opening condition and a closing condition of said opening portion;
a substantially rectangular guide groove contacting the engagement head portion of the elastic lock piece engaged with said through-hole for guiding a lock release member provided in a recording and reproducing apparatus for releasing the lock condition being formed in the longitudinal shape in a loading direction of the magnetic tape cassette in the surface of said slider not facing said the casing;
an axle in the longitudinal direction being mold of synthetic resin formed at a position substantially overlapping with the axle of said elastic lock piece in the loading direction of said magnetic tape cassette; and
a recess portion being provided in the surface of said slider, which faces the bottom surface of said casing, in the vicinity of a portion to which a ridge line of said guide groove is projected, said recess portion extending in the sliding direction of said slider in parallel with said ridge line.

2. The magnetic tape cassette according to claim 1, wherein said recess portion is a groove having a depth corresponding to 10 to 70% of a full thickness of said slider.

3. The magnetic tape cassette according to claim 1 or 2, wherein said recess portion is selected from any one of a groove having uniform depth, a groove that becomes continuously shallower toward the opposite direction of said loading direction and a groove that becomes shallower stepwise toward the opposite direction of said loading direction.

4. A magnetic tape cassette comprising:
an upper half;
a lower half coupled with the upper half to form a casing; and
a slider being fitted slidably back and forth of the casing along a bottom surface and side surfaces of the lower half, in which engagement sliding portions fitted into sliding grooves formed between right and left side walls of the lower half and right and left side walls of the upper half and having lower surfaces for engaging and slidingly contacting with the right and left side walls of the lower half are arranged at inner edges of upper ends of both right and left side walls of the slider;
a dust-proof wall which is formed by extending the rear ends of the engagement sliding portions of said slider toward a rear side wall of the lower half so as to close a gap between the upper half and the lower half in an inner deep portion of an opening formed in the lower portion on both sides of the casing between the rear side walls of the lower half and rear ends of the right and left side walls of the slider when the slider is in the forward position.

5. The magnetic tape cassette according to claim 4, wherein said dust-proof wall is slanted so as to be smaller in size toward the rear side wall of said lower half.

6. A method of forming a slider of a magnetic tape cassette by injecting molding, the slider of the magnetic tape cassette having side walls formed in an upright state in a rectangular horizontal surface at both right and left ends of the horizontal surface, comprising the step of:
rounding at least upper and lower end faces of vertical wall surfaces of a side core of molds for molding said side walls so that said side walls in a condition that said side walls ride over said side wall when the molds are opened after molding.

7. The molding method of fabricating a slider for a magnetic tape cassette according to claim 5, wherein polishing is performed well so as not to leave lateral abrasive trace on a vertical wall surface of a main core and the vertical wall surface of the side core of the molds for molding said side walls, and when the molds are opened after molding, a force for holding the side wall of said slider on the movable mold side is made small.

8. A molded article stamping method of fabricating a molded article, wherein at least one groove portion is formed in said thin plate portion and at least one convex stamped portion is formed in said groove portion when forming a molded article having a thin plate, and said groove portion is formed symmetrically with respect to a centerline in a longitudinal direction of said thin plate portion.

9. The molded article stamping method according to claim 8, wherein said molded article is a magnetic tape cassette and said thin plate portion is a lower half or a slider.

10. A molded article comprising:
a thin plate portion,
at least one groove portion formed in said thin plate portion and
a stamped portion formed in said at least one groove portion,
wherein said groove portion is formed symmetrically with respect to a centerline in a longitudinal direction of said thin plate portion.

11. The molded article according to claim 10, wherein said molded article is a magnetic tape cassette and said thin plate portion is a lower half or a slider.

12. A magnetic tape cassette comprising:
an upper half and a lower half coupled in a lid mating manner to form a cassette case for accommodating a pair of take-up hubs around which a magnetic tape is wound so that only a portion of the magnetic tensioned between said pair of take-up hubs is exposed;
a front lid pivoted rotatably between a closing position for covering the exposed portion of the magnetic tape and an opening position for exposing the magnetic tape, having projections inside side walls and biased by a spring toward said closing position;
a brake member having a rectangular strip-shaped horizontal plate portion provided with brake pieces for preventing rotation of take-up hubs by being engaged with gears provided on said take-up hubs and Further for allowing the rotation of said take-up hubs by releasing said engagement with said gears;
leg portions formed integrally and vertically at both ends in a longitudinal direction of the horizontal plate portion; and
brake arms extending from the leg portions in the vertical direction and in the horizontal direction to said longitudinal direction and having at their tip ends hook portions for engaging with the projections of said front lid in accordance with the rotation of said front lid, said brake member being slidable between a braking position where the rotation of said take-up hubs is prohibited and a release position where the rotation of said take-up hubs is allowed and biased to said braking position by a spring,
wherein a continuous convex portion is formed in the horizontal plate portion of said brake member, a top surface of the convex portion is used as a sliding surface with the upper half, and thickness reducing portions are provided on a surface opposite to said sliding surface so as to keep substantially constant a thickness of the brake member.

13. A leaf spring comprising:
a central bent portion;
arm portions extending substantially in a V-shaped manner on both right and left sides of the central bent portion; and
leg portions bent outwardly at both tip ends of the arm portions;
wherein a drawn portion is provided in at least a part of plate surfaces of said central bent portion and arm portions.
